(19) Europäisches Patentamt / European Patent Office / Office européen des brevets

(11) **EP 4 438 756 A1**

(12) **EUROPEAN PATENT APPLICATION**
published in accordance with Art. 153(4) EPC

(43) Date of publication:
**02.10.2024 Bulletin 2024/40**

(21) Application number: **22898652.7**

(22) Date of filing: **25.11.2022**

(51) International Patent Classification (IPC):
**C22C 38/00** (2006.01)     **C22C 38/58** (2006.01)
**C21D 8/02** (2006.01)      **C21D 9/46** (2006.01)

(52) Cooperative Patent Classification (CPC):
**C22C 38/00; C22C 38/58;** C21D 8/02; C21D 9/46

(86) International application number:
**PCT/JP2022/043522**

(87) International publication number:
**WO 2023/095870 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 JP 2021191746**

(71) Applicant: **NIPPON STEEL CORPORATION
Chiyoda-ku
Tokyo 100-8071 (JP)**

(72) Inventor: **YABU, Shohei
Tokyo 100-8071 (JP)**

(74) Representative: **Zimmermann & Partner
Patentanwälte mbB
Postfach 330 920
80069 München (DE)**

(54) **ZINC-PLATED STEEL SHEET**

(57)    This galvanized steel sheet includes: a steel sheet; and a galvanized layer provided on the steel sheet, wherein a microstructure at a 1/4 depth of a sheet thickness from a surface of the steel sheet includes, in terms of area%, ferrite: 2.0 to 25.0%, bainite: 10.0% or less, tempered martensite: more than 60.0% and 93.0% or less, and retained austenite: 5.0% or more, and an area ratio of the austenite, which is in contact with a 30° grain boundary, which has an Mn concentration of 1.2 times or more an average Mn concentration, and which has a grain size of 0.3 to 2.0 $\mu$m, is 3.0% or more.

EP 4 438 756 A1

**Description**

[Technical Field of the Invention]

The present invention relates to a galvanized steel sheet.
The present application claims priority based on Japanese Patent Application No. 2021-191746 filed in Japan on November 26, 2021, the contents of which are incorporated herein by reference.

[Background Art]

In recent years, reduction of carbon dioxide emission has been attempted in many fields from the viewpoint of global environmental protection. Also in automobile manufacturers, technological development for weight reduction of vehicle bodies for the purpose of low fuel consumption has been actively conducted. However, emphasis is also placed on improvement in collision resistance characteristics in order to ensure the safety of the occupant, and thus, it is not easy to reduce the weight of the vehicle body.
In order to achieve both weight reduction of the vehicle body and collision resistance characteristics, it has been studied to reduce the thickness of a member using a high strength steel sheet. For this reason, a steel sheet having both high strength and excellent workability is strongly desired. In order to meet these requirements, several techniques have been conventionally proposed. Since there are various processing manners in automobile members, required formability varies depending on members to be applied, but in particular, ductility is positioned as an important indicator of workability.
As steel sheets having both high strength and excellent workability, dual phase steel sheets (DP steel sheets) composed of a composite structure of soft ferrite and hard martensite, and transformation induced plasticity steel sheets (TRIP steel sheets) utilizing transformation induced plasticity have been conventionally proposed.
For example, Patent Document 1 discloses a high-strength cold-rolled steel sheet having a microstructure in which the sum of area ratios of ferrite and bainitic ferrite is 20% or more and 80% or less, the area ratio of retained austenite is more than 10% and 40% or less, the area ratio of tempered martensite is more than 0% and 50% or less, the proportion of retained austenite having an aspect ratio of 0.5 or less is 75% or more in area ratio, the proportion of retained austenite having an aspect ratio of 0.5 or less present at a ferrite grain boundary having a misorientation of 40° or more is 50% or more in area ratio, and the average KAM value of a bcc phase is 1° or less.

[Citation List]

[Patent Document]

[Patent Document 1]
PCT International Publication No. WO 2019/131189

[Summary of Invention]

[Problems to be Solved by the Invention]

In general, when the steel sheet is high-strengthened, breakage easily occurs in a local large strain region generated in impact deformation. For this reason, a steel sheet used for an automobile is required to have excellent characteristics in which breakage hardly occurs in a local large strain region generated in impact deformation, that is, excellent impact resistance.
However, as a result of studies by the present inventors, the present inventors have found that ductility and impact resistance need to be further improved in Patent Document 1.
The present invention has been made in view of the above circumstances. An object of the present invention is to provide a galvanized steel sheet having high strength and excellent ductility and impact resistance.

[Means for Solving the Problem]

The gist of the present invention is as follows.

(1) A galvanized steel sheet according to one aspect of the present invention includes: a steel sheet; and a galvanized layer disposed on the steel sheet, wherein a chemical composition of the steel sheet contains, in terms of mass%,

C: 0.150 to 0.350%,
Si: 0.100 to 2.500%,
Mn: 1.50 to 4.50%,
sol.Al: 0.010 to 1.000%,
P: 0.100% or less,
S: 0.030% or less,
N: 0.100% or less,
O: 0.010% or less,
Ti: 0 to 0.200%,
Nb: 0 to 0.025%,
V: 0 to 0.100%,
B: 0 to 0.0100%,
Cu: 0 to 2.00%,
Cr: 0 to 2.00%,
Mo: 0 to 1.00%,
Ni: 0 to 2.00%,
Ca: 0 to 0.0200%,
Mg: 0 to 0.0200%,
REM: 0 to 0.1000%,
Bi: 0 to 0.0200%,
one or more of Zr, Co, Zn, and W: 0 to 1.0000% in total, and
Sn: 0 to 0.100%, and
a remainder of Fe and impurities,
a microstructure at a 1/4 position of a sheet thickness from a surface of the steel sheet includes, in terms of area%,
ferrite: 2.0 to 25.0%,
bainite: 10.0% or less,
tempered martensite: more than 60.0% and 93.0% or less, and
retained austenite: 5.0% or more, and
an area ratio of the retained austenite,

which is in contact with a 30° grain boundary,
which has an Mn concentration of 1.2 times or more an average Mn concentration, and
which has a grain size of 0.3 to 2.0 $\mu$m, is 3.0% or more.

(2) In the galvanized steel sheet according to the above (1), the chemical composition of the steel sheet may contain, in terms of mass%, one or more selected from the group consisting of

Ti: 0.001 to 0.200%,
Nb: 0.001 to 0.025%,
V: 0.001 to 0.100%,
B: 0.0001 to 0.0100%,
Cu: 0.01 to 2.00%,
Cr: 0.01 to 2.00%,
Mo: 0.001 to 1.00%,
Ni: 0.01 to 2.00%,
Ca: 0.0005 to 0.0200%,
Mg: 0.0005 to 0.0200%,
REM: 0.0005 to 0.1000%,
Bi: 0.0005 to 0.0200%,
one or more of Zr, Co, Zn, and W: 0.0005 to 1.0000% in total, and
Sn: 0.0005 to 0.100%.

[Effects of the Invention]

According to the above aspect of the present invention, it is possible to provide a galvanized steel sheet having high strength and excellent ductility and impact resistance.

[Brief Description of the Drawing]

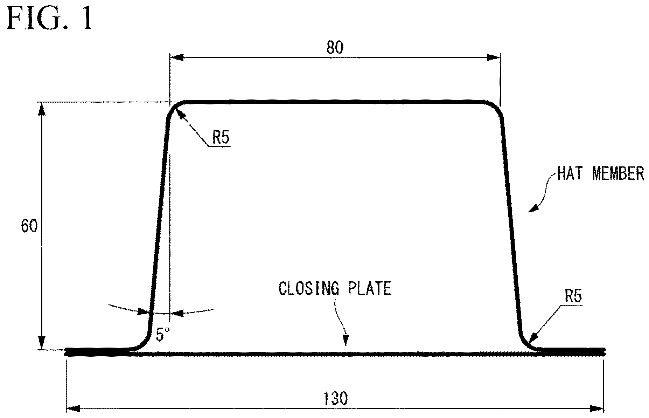

FIG. 1 is a view for explaining a test method of a three-point bending test.

[Embodiment of the Invention]

Hereinafter, the chemical composition and the microstructure of the steel sheet constituting the galvanized steel sheet according to the present embodiment will be described more specifically. However, the present invention is not limited only to the configuration disclosed in the present embodiment, and various modifications can be made without departing from the gist of the present invention.

In the numerical range described below with "to" interposed therebetween, the lower limit value and the upper limit value are included in the range. A numerical value indicated as "less than" or "more than" is not included in the numerical range. In the following description, % relating to the chemical composition of the steel sheet is mass% unless otherwise specified.

Chemical composition

The chemical composition of the steel sheet constituting the galvanized steel sheet according to the present embodiment includes, in terms of mass%, C: 0.150 to 0.350%, Si: 0.100 to 2.500%, Mn: 1.50 to 4.50%, sol.Al: 0.010 to 1.000%, P: 0.100% or less, S: 0.030% or less, N: 0.100% or less, O: 0.010% or less, and the remainder: Fe and impurities. Hereinafter, each element will be described in detail.

C: 0.150 to 0.350%

C is an element necessary for obtaining a desired strength. When the C content is less than 0.150%, a desired strength cannot be obtained. Therefore, the C content is 0.150% or more. The C content is preferably 0.170% or more, 0.180% or more, or 0.200% or more.

On the other hand, when the C content is more than 0.350%, the ductility of the galvanized steel sheet is deteriorated, and a desired TS × El cannot be obtained. Therefore, the C content is 0.350% or less. The C content is preferably 0.330% or less, or 0.300% or less.

Si: 0.100 to 2.500%

Si has an action of stabilizing retained austenite and improving ductility. Si also has an action of improving the soundness of the steel by deoxidation (suppressing generation of defects such as blow holes in the steel). When the Si content is less than 0.100%, an effect of the above action cannot be obtained. Therefore, the Si content is 0.100% or more. The Si content is preferably 0.500% or more, or 0.700% or more.

On the other hand, when the Si content is more than 2.500%, the weldability of the galvanized steel sheet is deteriorated. Therefore, the Si content is 2.500% or less. The Si content is preferably 2.000% or less, 1.800% or less, or 1.500% or less.

Mn: 1.50 to 4.50%

Mn is an element that is concentrated in the carbide in the microstructure of the hot-rolled steel sheet, delays dissolution of the carbide during heating, and remains as a Mn concentrated portion after the carbide is dissolved, to thereby stabilize retained austenite. When the Mn content is less than 1.50%, it is not possible to obtain an effect of stabilizing retained austenite by concentrating of Mn in the carbide. Thus, it is not possible to set the area ratio of retained austenite, which is in contact with the 30° grain boundary, which has a Mn concentration of 1.2 times or more the average Mn concentration, and which has a grain size of 0.3 to 2.0 $\mu$m (hereinafter, may be described as "retained austenite area ratio at the 30° grain boundary") to a desired amount. Therefore, the Mn content is 1.50% or more. The Mn content is preferably 1.80% or more, 2.00% or more, or 2.30% or more.

On the other hand, when the Mn content is more than 4.50%, Mn is excessively concentrated in the carbide in the microstructure of the hot-rolled steel sheet, and dissolution of the carbide during annealing is delayed, so that a desired strength cannot be obtained. Therefore, the Mn content is 4.50% or less. The Mn content is preferably 4.30% or less, 4.00% or less, 3.80% or less, or 3.50% or less.

sol.Al: 0.010 to 1.000%

Al has an action of improving the soundness of steel by deoxidation and an action of controlling ferrite transformation. When the sol.Al content is less than 0.010%, an effect of the above action cannot be obtained. Therefore, the sol.Al content is 0.010% or more. The sol.Al content is preferably 0.030% or more, 0.050% or more, 0.080% or more, or 0.100% or more.

On the other hand, when the sol.Al content is more than 1.000%, alumina precipitated in a cluster form is generated, and the ductility of the galvanized steel sheet is deteriorated. Therefore, the sol.Al content is 1.000% or less. The sol.Al content is preferably 0.800% or less, 0.600% or less, 0.400% or less, or 0.200% or less.

Incidentally, sol.Al means acid-soluble Al, and indicates solid solution Al present in a solid-solution state in steel.

P: 0.100% or less

P is an element generally contained in steel as an impurity, and the lower the P content, the more preferable. In particular, when the P content is more than 0.100%, the workability and weldability of the galvanized steel sheet are significantly deteriorated, and the impact resistance thereof are also deteriorated. Therefore, the P content is 0.100% or less. The P content is preferably 0.080% or less, 0.060% or less, or 0.040% or less.

The P content is preferably 0%, but may be 0.001% or more from the viewpoint of refining cost.

S: 0.030% or less

S is an element generally contained in steel as an impurity, and the lower the S content, the more preferable. When the S content is more than 0.030%, the ductility of the galvanized steel sheet is significantly deteriorated. Therefore, the S content is 0.030% or less. The S content is preferably 0.020% or less, or 0.010% or less.

The S content is preferably 0%, but may be 0.0001 % or more from the viewpoint of refining cost.

N: 0.100% or less

N is an element generally contained in steel as an impurity, and the lower the N content, the more preferable. When the N content is more than 0.100%, the ductility of the galvanized steel sheet is significantly deteriorated. Therefore, the N content is 0.100% or less. The N content is preferably 0.080% or less, 0.060% or less, or 0.040% or less.

The N content is preferably 0%, but may be 0.0001% or more from the viewpoint of refining cost.

O: 0.010% or less

O is an element that forms a coarse oxide that becomes a starting point of fracture when contained in steel in a large amount, and causes brittle fracture and hydrogen-induced cracking. When the O content is more than 0.010%, brittle fracture and hydrogen-induced cracking are likely to occur. Therefore, the O content is 0.010% or less. The O content is preferably 0.008% or less, 0.006% or less, or 0.004% or less.

The O content may be 0.0005% or more, or 0.001% or more in order to disperse a large number of fine oxides during deoxidation of the molten steel.

The remainder of the chemical composition of the steel sheet constituting the galvanized steel sheet according to the present embodiment may be Fe and impurities. In the present embodiment, the impurities mean substances mixed from ore as a raw material, scrap, a manufacturing environment, and the like, and/or substances acceptable within a range not adversely affecting the galvanized steel sheet according to the present embodiment.

The chemical composition of the steel sheet according to the present embodiment may contain the following elements as optional elements instead of a part of Fe. The lower limit of the content when these optional elements are not contained is 0%. Hereinafter, the optional elements will be described in detail.

Ti: 0.001 to 0.200%

Ti precipitates as a carbide or a nitride in steel, and has an action of increasing the strength of the galvanized steel sheet by refinement of the microstructure due to the austenite pinning effect and precipitation strengthening. In order to reliably obtain this effect, the Ti content is preferably 0.001% or more.

On the other hand, when the Ti content is more than 0.200%, the strength of the galvanized steel sheet is deteriorated due to excessive precipitation of ferrite. Therefore, the Ti content is 0.200% or less.

Nb: 0.001 to 0.025%

Nb is an element that is finely precipitated in steel as a carbide and a nitride to improve the strength of steel by precipitation strengthening. In order to reliably obtain this effect, the Nb content is preferably 0.001% or more.
However, when the Nb content is more than 0.025%, the ductility of the galvanized steel sheet is deteriorated. Therefore, the Nb content is 0.025% or less.

V: 0.001 to 0.100%

Similarly to Nb, V is an element that is finely precipitated in steel as a carbide and a nitride, and improves the strength of steel by precipitation strengthening. In order to reliably obtain this effect, the V content is preferably 0.001% or more.
However, when the V content is more than 0.100%, the ductility of the galvanized steel sheet is deteriorated. Therefore, the V content is 0.100% or less.

B: 0.0001 to 0.0100%

B has an action of enhancing the hardenability of the galvanized steel sheet. In order to reliably obtain this effect, the B content is preferably 0.0001% or more.
However, when the B content is more than 0.0100%, the ductility of the galvanized steel sheet is significantly deteriorated. Therefore, the B content is 0.0100% or less.

Cu: 0.01 to 2.00%

Cu has an action of enhancing the hardenability of the galvanized steel sheet, and an action of increasing the strength of the galvanized steel sheet by being precipitated as a carbide in steel at a low temperature. In order to reliably obtain these effects, the Cu content is preferably 0.01% or more.
However, when the Cu content is more than 2.00%, intergranular cracking of the slab may occur. Therefore, the Cu content is 2.00% or less.

Cr: 0.01 to 2.00%

Cr has an action of enhancing the hardenability of the galvanized steel sheet. In order to reliably obtain this effect, the Cr content is preferably 0.01% or more.
However, when the Cr content is more than 2.00%, the chemical convertibility of the galvanized steel sheet is significantly deteriorated. Therefore, the Cr content is 2.00% or less.

Mo: 0.001 to 1.00%

Mo has an action of increasing the hardenability of the galvanized steel sheet, and an action of increasing the strength of the galvanized steel sheet by being precipitated as a carbide in steel. In order to reliably obtain these effects, the Mo content is preferably 0.001% or more.
However, even when the Mo content is more than 1.00%, an effect of the above action is saturated, which is economically undesirable. Therefore, the Mo content is 1.00% or less.

Ni: 0.01 to 2.00%

Ni has an action of enhancing the hardenability of the galvanized steel sheet. In order to reliably obtain this effect, the Ni content is preferably 0.01% or more.
However, since Ni is an expensive element, it is economically not preferable to contain Ni in a large amount. Therefore, the Ni content is 2.00% or less.

Ca: 0.0005 to 0.0200%

Ca has an action of enhancing the ductility of the galvanized steel sheet by adjusting the shape of inclusions in steel to a preferable shape. In order to reliably obtain this effect, the Ca content is preferably 0.0005% or more.
However, when the Ca content is more than 0.0200%, inclusions are excessively generated in steel, and the ductility of the galvanized steel sheet is deteriorated. Therefore, the Ca content is 0.0200% or less.

Mg: 0.0005 to 0.0200%

Mg has an action of enhancing the ductility of the galvanized steel sheet by adjusting the shape of inclusions in steel to a preferable shape. In order to reliably obtain this effect, the Mg content is preferably 0.0005% or more.

However, when the Mg content is more than 0.0200%, inclusions are excessively generated in steel, and the ductility of the galvanized steel sheet is deteriorated. Therefore, the Mg content is 0.0200% or less.

REM: 0.0005 to 0.1000%

REM has an action of enhancing the ductility of the galvanized steel sheet by adjusting the shape of inclusions in steel to a preferable shape. In order to reliably obtain this effect, the REM content is preferably 0.0005% or more.

However, when the REM content is more than 0.1000%, inclusions are excessively generated in steel, and the ductility of the galvanized steel sheet is deteriorated. Therefore, the REM content is 0.1000% or less.

Here, REM refers to 17 elements consisting of Sc, Y, and lanthanoid, and the content of REM refers to the total content of these elements. Lanthanoid is industrially added in a form of misch metal.

Bi: 0.0005 to 0.0200%

Bi has an action of enhancing the ductility of the galvanized steel sheet by refining the solidified structure. In order to more reliably obtain an effect of the above action, the Bi content is preferably 0.0005% or more.

However, when the Bi content is more than 0.0200%, an effect of the above action is saturated, which is not economically preferable. Therefore, the Bi content is 0.0200% or less.

One or more of Zr, Co, Zn, and W: 0.0005 to 1.0000% in total

Sn: 0.0005 to 0.100%

Zr, Co, Zn, and W, and Sn are elements effective for high-strengthening the steel sheet. In order to reliably obtain this effect, the total content of Zr, Co, Zn, and W is preferably 0.0005% or more, or the Sn content is preferably 0.0005% or more.

The present inventors have confirmed that even when Zr, Co, Zn, and W are contained in a total amount of 1.0000% or less, the effect of the galvanized steel sheet according to the present embodiment is not impaired. Therefore, one or more of Zr, Co, Zn, and W may be contained in a total amount of 1.0000% or less.

In addition, the present inventors have confirmed that the effect of the galvanized steel sheet according to the present embodiment is not impaired even when Sn is contained in an amount of 0.100% or less. When a large amount of Sn is contained, defects may occur during hot rolling, and therefore the Sn content is 0.100% or less.

The chemical composition of the steel sheet described above may be measured by a general analysis method. Measurement may be performed by, for example, inductively coupled plasma-atomic emission spectrometry (ICP-AES). The sol.Al may be measured by ICP-AES using a filtrate after a sample is thermally decomposed with an acid. C and S may be measured by a combustion-infrared absorption method, N may be measured by an inert gas fusion-thermal conductivity method, and O may be measured by an inert gas fusion-non-dispersive infrared absorption method.

Incidentally, the chemical composition is analyzed after 150 μm or more of the front and back surfaces of the steel sheet including the galvanized layer on the surface of the galvanized steel sheet is ground by mechanical grinding.

Microstructure of steel sheet

Next, the microstructure of the steel sheet constituting the galvanized steel sheet according to the present embodiment will be described.

In the steel sheet according to the present embodiment, the microstructure at a 1/4 position of the sheet thickness from the surface of the steel sheet includes,

in terms of area%,
ferrite: 2.0 to 25.0%,
bainite: 10.0% or less
tempered martensite: more than 60.0% and 93.0% or less, and
retained austenite: 5.0% or more, and
the area ratio of the retained austenite,

which is in contact with the 30° grain boundary,

which has an Mn concentration of 1.2 times or more the average Mn concentration, and which has a grain size of 0.3 to 2.0 μm, is 3.0% or more.

In the present embodiment, the 1/4 position of the sheet thickness from the surface of the steel sheet refers to a region of a depth of 1/8 of the sheet thickness from the surface of the steel sheet constituting the galvanized steel sheet to a depth of 3/8 of the sheet thickness from the surface. The reason for defining the microstructure at this position is that the microstructure at this position shows a typical microstructure of the steel sheet.

Hereinafter, each definition will be described.

Area ratio of ferrite: 2.0 to 25.0%

Ferrite is a microstructure generated when fcc is transformed to bcc at a relatively high temperature. When the area ratio of ferrite is less than 2.0%, a desired ductility cannot be obtained. Therefore, the area ratio of ferrite is 2.0% or more. The area ratio of ferrite is preferably 5.0% or more, 8.0% or more, or 10.0% or more.

On the other hand, when the area ratio of ferrite is more than 25.0%, a desired strength cannot be obtained. Therefore, the area ratio of ferrite is 25.0% or less. The area ratio of ferrite is preferably 23.0% or less, 20.0% or less, or 18.0% or less.

Bainite: 10.0% or less

Bainite is a microstructure composed of fine grains and a carbide. When the area ratio of bainite is more than 10.0%, a desired strength and ductility cannot be obtained. Therefore, the area ratio of bainite is 10.0% or less. The area ratio of bainite is preferably 7.0% or less, 5.0% or less, or 3.0% or less. The area ratio of bainite is preferably as small as possible, and may be 0%.

Tempered martensite: more than 60.0% and 93.0% or less

Tempered martensite is a microstructure that enhances the strength and ductility of the galvanized steel sheet. When the area ratio of tempered martensite is 60.0% or less, a desired strength and ductility cannot be obtained. Therefore, the area ratio of tempered martensite is more than 60.0%. The area ratio of tempered martensite is preferably 63.0% or more, 65.0% or more, 68.0% or more, 70.0% or more, or 75.0% or more.

On the other hand, when the area ratio of tempered martensite is more than 93.0%, a desired ductility cannot be obtained. Therefore, the area ratio of tempered martensite is 93.0% or less. The area ratio of tempered martensite is preferably 90.0% or less, 85.0% or less, or 80.0% or less.

Retained austenite: 5.0% or more

The retained austenite is a microstructure existing as a face-centered cubic lattice even at room temperature. The retained austenite has an action of enhancing the ductility of the galvanized steel sheet through transformation induced plasticity (TRIP). When the area ratio of retained austenite is less than 5.0%, a desired ductility cannot be obtained. Therefore, the area ratio of retained austenite is 5.0% or more. The area ratio of retained austenite is preferably 8.0% or more, or 10.0% or more.

Since it is necessary to contain a large amount of an alloying element such as C in order to obtain a large amount of retained austenite, the area ratio of retained austenite may be 20.0% or less. The area ratio of retained austenite is preferably 18.0% or less, or 15.0% or less.

The steel sheet according to the present embodiment may contain a total of less than 5.0% of fresh martensite and pearlite as the remainder in microstructure.

The area ratio of each microstructure is measured by the following method.

First, a test piece is collected from a galvanized steel sheet so that a microstructure can be observed at a 1/4 position of the sheet thickness from the surface of the steel sheet (region of a 1/8 depth from the surface to a 3/8 depth from the surface) and at the center position in the sheet width direction in the sheet thickness cross section parallel to the rolling direction.

The cross section of the test piece is polished with silicon carbide paper of #600 to #1500. Then, the test piece is mirror-finished using a liquid obtained by dispersing diamond powder having a grain size of 1 to 6 μm in a diluent such as alcohol or pure water. Next, the mirror-finished test piece is polished using colloidal silica containing no alkaline solution at room temperature to remove strain introduced into the surface layer of the sample. At an arbitrary position in the longitudinal direction of the cross section of the sample, a region from a length of 50 μm and a 1/8 depth of the sheet thickness from the surface to a 3/8 depth of the sheet thickness from the surface is measured at a measurement interval of 0.1 μm by electron backscatter diffraction to obtain crystal orientation information.

For the measurement, an EBSD analyzer including a thermal field emission scanning electron microscope (JSM-7001F, manufactured by JEOL Ltd.) and an EBSD detector (DVC type 5 detector, manufactured by TSL Solutions Ltd.) is used. At this time, the degree of vacuum in the EBSD analyzer is $9.6 \times 10^{-5}$ Pa or less, the acceleration voltage is 15 kV, the irradiation current level is 13, and the irradiation level of the electron beam is 62.

A region where the crystal structure is fcc is specified from the obtained crystal orientation information, using a "Phase Map" function installed on software "OIM Analysis (registered trademark)" attached to the EBSD analyzer. The area ratio of retained austenite is obtained by determining this region as retained austenite and calculating the area ratio thereof.

Next, using a "Grain Orientation Spread" function installed on the "OIM Analysis (registered trademark)", a region having a "Grain Orientation Spread" of 1° or less is extracted as ferrite under the condition that a boundary having a misorientation of 15° or more is regarded as a grain boundary. The area ratio of ferrite is obtained by calculating the area ratio of the extracted ferrite.

Subsequently, a "Grain Average Image Quality" map (GAIQ map) is obtained using a "Grain Average Misorientation" function. In the obtained GAIQ map, a region surrounded by grain boundaries having a crystal misorientation of 15° or more is defined as a grain. When the maximum value of "Grain Average Image Quality Value (GAIQ value)" of the region extracted as ferrite is Iα, a region where the GAIQ value exceeds Iα/2 is extracted as bainite, and a region where the GAIQ value is Iα/2 or less is extracted as tempered martensite. The area ratio of each of bainite and tempered martensite is obtained by calculating the area ratio of the extracted region of bainite and the area ratio of the region of tempered martensite.

The area ratio of the remainder in microstructure is obtained by subtracting the area ratios of the above microstructures from 100%.

For the removal of contamination on the surface layer of the observation surface, a method such as buffing using alumina particles having a grain size of 0.1 μm or less, or Ar ion sputtering may be used.

The area ratio of retained austenite, which is in contact with the 30° grain boundary, which has a Mn concentration of 1.2 times or more the average Mn concentration, and which has a grain size of 0.3 to 2.0 μm: 3.0% or more

The above retained austenite can be rephrased as retained austenite satisfying the following conditions (1) to (III).

(I) Being in contact with 30° grain boundary.
(II) The Mn concentration is 1.2 times or more the average Mn concentration.
(III) The grain size is 0.3 to 2.0 μm.

When the area ratio of the retained austenite satisfying the above conditions (I) to (III) (the retained austenite area ratio at the 30° grain boundary) is less than 3.0%, the impact resistance of the galvanized steel sheet are deteriorated. Therefore, the area ratio of the above retained austenite is 3.0% or more. The area ratio of the above retained austenite is preferably 4.0% or more, or 5.0% or more.

The upper limit is not particularly specified, but the area ratio of the above retained austenite may be 20.0% or less.

The area ratio of the above retained austenite is measured by the following method.

First, a test piece is collected and treated in the same manner as in measuring the area ratio of each microstructure. The measurement position is a 1/4 position of the sheet thickness from the surface of the steel sheet (region of a 1/8 depth from the surface to a 3/8 depth from the surface) and a center position in the sheet width direction. Next, the 30° grain boundary is specified using the "Grain Orientation Spread" function installed on the software "OIM Analysis (registered trademark)" attached to the EBSD analyzer. Next, a region where the crystal structure is fcc, that is, retained austenite is specified using the "Phase Map" function installed on the "OIM Analysis (registered trademark)". The retained austenite in contact with the 30° grain boundary is specified through this operation (condition (1)). The retained austenite in contact with the 30° grain boundary also includes retained austenite present on the 30° grain boundary.

The Mn concentration in the measurement region where the above measurement has been performed is measured by an electronic probe microanalyzer (EPMA). A distribution image of the Mn concentration is obtained under the measurement conditions of an acceleration voltage of 15 kV and a magnification of 5,000 times. More specifically, the Mn concentration is measured at 40,000 or more points at a measurement interval of 0.4 μm. The average value of the Mn concentrations obtained from all the measurement points is regarded as an average Mn concentration.

Among the retained austenite in contact with the 30° grain boundary in the measurement region, retained austenite having a Mn concentration of 1.2 times or more the average Mn concentration is specified (condition (11)).

The grain size of the retained austenite is obtained by calculating the equivalent circle diameter of the retained austenite satisfying the conditions (I) and (11) in the measurement region. The retained austenite having a grain size of 0.3 to 2.0 μm is specified through this operation (condition (III)).

By calculating the area ratio of the retained austenite that satisfies the conditions (I) to (III) in the measurement region, the area ratio of the retained austenite that is in contact with the 30° grain boundary, has a Mn concentration of 1.2 times or more the average Mn concentration, and has a grain size of 0.3 to 2.0 μm is obtained.

Galvanized layer

The galvanized steel sheet according to the present embodiment has a galvanized layer on at least one surface of the above steel sheet. The galvanized layer may be a hot-dip galvanized layer and a hot-dip zinc alloy galvanized layer, and a galvannealed layer and a zinc alloy galvannealed layer obtained by subjecting these plated layers to an alloying treatment. In addition to Zn, an additive element such as Al may be contained. The adhesion amount of the plated layer is not particularly limited, and may be a general adhesion amount.

When the galvanized layer is a hot-dip galvanized layer, the content of Fe in the hot-dip galvanized layer is preferably 3.0 mass% or less in order to enhance adhesion between the sheet surface and the hot-dip galvanized layer.

The hot-dip galvanized layer and the hot-dip zinc alloy galvanized layer may contain one or more of Al, Ag, B, Be, Bi, Ca, Cd, Co, Cr, Cs, Cu, Ge, Hf, Zr, I, K, La, Li, Mg, Mn, Mo, Na, Nb, Ni, Pb, Rb, Sb, Si, Sn, Sr, Ta, Ti, V, W, Zr, and REM as long as the corrosion resistance and formability of the galvanized steel sheet are not inhibited. In particular, Ni, Al, and Mg are effective for improving the corrosion resistance of the steel sheet.

The hot-dip galvanized layer or the hot-dip zinc alloy galvanized layer may be a galvannealed layer or a zinc alloy galvannealed layer subjected to an alloying treatment. When the hot-dip galvanized layer or the hot-dip zinc alloy galvanized layer is subjected to an alloying treatment, the Fe content in the galvannealed layer or the zinc alloy galvannealed layer after the alloying treatment is preferably 7.0 to 13.0 mass% from the viewpoint of improving adhesion between the sheet surface and the alloyed plated layer. When the steel sheet including the hot-dip galvanized layer or the hot-dip zinc alloy galvanized layer is subjected to an alloying treatment, Fe is taken into the plated layer, so that the Fe content increases. As a result, the Fe content in the plated layer can be 7.0 mass% or more. That is, the galvanized layer having an Fe content of 7.0 mass% or more is a galvannealed layer or a zinc alloy galvannealed layer.

The Fe content in the galvanized layer can be obtained by the following method. Only the galvanized layer is dissolved and removed using a 5 vol% HCl aqueous solution to which an inhibitor is added. The Fe content (mass%) in the galvanized layer can be obtained by measuring the Fe content in the obtained solution by inductively coupled plasma-atomic emission spectrometry (ICP-AES).

Strength and ductility

The galvanized steel sheet according to the present embodiment may have a tensile strength of 1,180 MPa or more. When the tensile strength is 1,180 MPa or more, it can contribute to weight reduction of the vehicle body. The upper limit of the tensile strength is not particularly limited, but may be 1,780 MPa or less.

The product (TS × El) of the tensile strength (TS) and the total elongation (El) may be 16,500 MPa·% or more. When TS × El is 16,500 MPa·% or more, it can be determined that the galvanized steel sheet has high strength and excellent ductility. The upper limit of TS × El is not particularly specified, but may be 26,000 MPa·% or less.

The tensile strength and the total elongation are measured by a tensile test in accordance with JIS Z 2241 :2011. The test piece is a No. 5 test piece of JIS Z 2241:2011. The tensile test piece may be collected at a 1/4 position from the end in the sheet width direction, and a direction perpendicular to the rolling direction may be taken as the longitudinal direction.

Impact resistance

The galvanized steel sheet according to the present embodiment may have an impact absorbed energy of more than 1.0 kJ in a three-point bending test. When the impact absorbed energy in the three-point bending test is more than 1.0 kJ, it can be determined that the galvanized steel sheet has excellent impact resistance. The upper limit is not particularly specified, but may be 3.0 kJ or less, 2.5 kJ or less, or 2.0 kJ or less.

The impact absorbed energy in the three-point bending test is measured by the following method.

First, a test piece having a length of 800 mm or more is collected from a galvanized steel sheet, and a hat-shaped test specimen having the cross section shown in FIG. 1 is prepared. The unit in FIG. 1 is mm. The test specimen shown in FIG. 1 is obtained by spot-welding a hat member of 60 mm × 80 mm produced by bending a galvanized steel sheet using a press brake, and a closing plate produced from the galvanized steel sheet. The hat member and the closing plate are fastened by spot welding at an interval of 40 mm with a nugget diameter of more than or equal to 5 × t/2 (t is the sheet thickness). In the spot welding, the center between the spots is disposed at the center position in the longitudinal direction of the test specimen. This test specimen is placed on support rolls each having a radius of 30 mm and disposed at an interval of 700 mm. A three-point bending test is then performed by bringing an impactor (R: 50 mm) into contact with the test specimen at a constant speed of 7.2 km/h. The displacement and load until the test piece breaks are obtained, and the product thereof (displacement × load) is calculated to obtain the impact absorbed energy in the three-point bending test.

Sheet thickness

The sheet thickness of the galvanized steel sheet according to the present embodiment is not particularly limited, but may be 0.6 to 8.0 mm. By setting the sheet thickness of the galvanized steel sheet to 0.6 mm or more, it is possible to suppress an excessive rolling load and to easily perform hot rolling. In addition, by setting the sheet thickness to 8.0 mm or less, the above microstructure can be easily obtained.

Manufacturing conditions

In a preferred method for manufacturing the galvanized steel sheet according to the present embodiment, the following steps (1) to (7) are sequentially performed. The temperature of the slab and the temperature of the steel sheet in the present embodiment refer to the surface temperature of the slab and the surface temperature of the steel sheet.

(1) A slab having the above-described chemical composition is heated to 1,220°C or higher.
(2) Rough rolling of final three stands is performed at a rolling reduction of 20% or more in a temperature range of 1,100°C or higher.
(3) After completion of the rough rolling and before the start of finish rolling, the temperature is retained in a temperature range of 1,000°C or higher for longer than 50 seconds.
(4) The finishing temperature FT is set to a temperature range of T1 (°C) -80°C or higher, the cumulative rolling reduction in the temperature range of T1 (°C) or higher is set to 75% or more, and the cumulative rolling reduction in the rolling of final two stands is set to 20% or more.
T1 (°C) is obtained by the following formula (A). The element symbol in the following formula represents the content of each element in mass%, and when the element is not contained, 0 is substituted.

$$T1 = 937 + 168 \times Ti + 3545 \times Nb + 4500 \times B \cdots (A)$$

(5) Coiling is performed at a coiling temperature CT that satisfies 500°C or higher and a temperature $T_C$ (°C) represented by the following formulas [1] and [2] or lower. The element symbol in the following formulas indicates the content of each element in mass%.

$$CT \leq T_C = (C/0.45 + C^{\gamma\theta})/0.0019 \cdots [1]$$

$$C^{\gamma 0} = 0.015 \times Mn + 0.041 \times Si + 0.671 \cdots [2]$$

(6) After the coiling, the temperature is retained at a post-coiling retention temperature T that satisfies the coiling temperature CT ±50°C and Tc (°C) or lower for a time tc (h) represented by the following formula [3] or longer.

$$t_C = \{a(T - p)^2 + q\}/3600 \cdots [3]$$

In the above formula [3], a, p, and q are represented by the following formulas [4] to [6], and T is a post-coiling retention temperature.
The element symbol in the following formulas indicates the content of each element in mass%. FT in the following formula [6] represents the finishing temperature, and T1 is represented by the above formula (A).

$$a = -1.516 \times C + 0.0464 \times Mn + 0.5257 \times Si + 531.2 \times B \cdots [4]$$

$$p = 680 - 195 \times C + 23 \times Si - 24 \times Mn \cdots [5]$$

$$q = \left(5264 + 4 \times 10^{6} \times B\right) \times \left(\frac{FT}{T1}\right)^{2} \qquad \cdots [6]$$

(7) Annealing is performed so as to satisfy the following conditions (a) to (f).

(a) An average heating rate in a temperature range of 600°C to $Ac_1$ +10°C is 10.0 °Cls or slower.
$Ac_1$ is obtained by the following formula (B). The element symbol in the following formula represents the content of each element in mass%, and when the element is not contained, 0 is substituted.

$Ac_1 (°C)$ = 727 - 32.7 × C + 14.9 × Si + 2 × Mn - 17 × Cu - 14.2 × Ni + 17.8 × Cr + 25.6 × Mo    (B)

(b) The temperature is retained at a maximum heating temperature of $Ac_1$°C +30°C to 900°C for 1 to 1,000 seconds (first soaking treatment).
(c) An average cooling rate to a temperature range of 700 to 600°C is 20.0 °C/s or slower (first cooling).
(d) The temperature is retained in a temperature range of 400 to 600°C for 60 to 300 seconds (second soaking treatment). Thereafter, a hot-dip galvanized layer is formed on the sheet surface.
(e) Cooling is performed to a temperature range of higher than 100°C and 300°C or lower (second cooling).
(f) The temperature is retained in a temperature range of 300 to 420°C for 100 to 1,000 seconds (third soaking treatment).

The galvanized steel sheet according to the present embodiment can be stably manufactured by the manufacturing method in which the above steps are inseparably controlled.
Hereinafter, each step will be described.

(1) Slab heating

The slab to be subjected to hot rolling is preferably heated to a temperature range of 1,220°C or higher. In the temperature range of 1,220°C or higher, the steel sheet temperature may be varied or may be constant. In the above temperature range, the temperature is preferably retained for 30 minutes or longer. By heating to a temperature of 1,220°C or higher, it is possible to control the shape and amount of prior austenite grains and to sufficiently dissolve carbides. As a result, the area ratio of retained austenite and the retained austenite area ratio at the 30° grain boundary can be increased.
Other manufacturing processes preceding hot rolling are not particularly limited. After melting by a blast furnace, an electric furnace, or the like, various secondary smelting is performed. Then, a slab may be cast by a method such as normal continuous casting, casting by an ingot method, or thin slab casting. In the case of continuous casting, the cast slab may be once cooled to a low temperature and heated again, and then hot-rolled, or the cast slab may be hot-rolled as it is after casting without being cooled to a low temperature. As a raw material, scrap may be used. In addition, slabs obtained by performing hot working or cold working on these slabs as necessary can also be used.
After the heating and retention the temperature, it is more preferable to perform width reduction rolling on the slab at a rolling reduction of 10% or more in a temperature range of 1,200°C or higher. When width reduction rolling is performed on the slab at a rolling reduction of 10% or more, the retained austenite area ratio at the 30° grain boundary can be 5% or more, thus making it possible to further improve the impact resistance. Although the detailed mechanism is unknown, the retained austenite area ratio at the 30° grain boundary can be increased by performing this width reduction rolling on the slab.
The rolling reduction in the width reduction rolling of the slab can be expressed by (1 - w1/w0) × 100 (%), where w0 is the length in the width direction of the slab before rolling, and w1 is the length in the width direction of the slab after rolling. Examples of a method for performing width reduction rolling on the slab include a method of rolling the slab using rolls installed such that the rotation axes of the rolls are perpendicular to the sheet surface of the slab, and a method of sequentially pressing the slab from the slab width direction.

(2) Rough rolling

In the rough rolling, rolling of final three stands is preferably performed in a temperature range of 1,100°C or higher and at a rolling reduction of 20% or more for each stand. By performing rough rolling under these conditions, the prior austenite grains can be controlled to be equiaxed by recrystallization. As a result, the retained austenite area ratio at the 30° grain boundary can be increased. When the rolling reduction is 20% or more, there is no problem even if the rolling reduction is high. However, for example, when the rolling reduction is 60% or more, wear of the roll is caused due to an increase in rolling load, and productivity decreases. Thus, preferably, the rolling reduction of each stand is less than 60%.

(3) Retention after completion of rough rolling and before start of finish rolling

After completion of the rough rolling and before the start of the finish rolling, it is preferable to retain the temperature in a temperature range of 1 ,000°C or higher for longer than 50 seconds. Retention the temperature under these conditions can promote the growth of prior austenite grains. As a result, the retained austenite area ratio at the 30° grain boundary can be increased.
Examples of the method for retention the temperature in the above temperature range include a method of heating by a heating furnace or induction heating after completion of rough rolling, and a method of using a heat insulating cover. In the temperature retention, the temperature of the steel sheet may be constant or varied in a temperature range of 1,000°C or higher.

(4) Finish rolling

The finishing temperature FT is preferably set to a temperature range of T1 (°C) -80°C or higher, the cumulative rolling reduction in the temperature range of T1 (°C) or higher is set to 75% or more, and the cumulative rolling reduction in the rolling of final two stands is set to 20% or more. By performing finish rolling under these conditions, prior austenite grains can be controlled to be equiaxed by recovery and recrystallization. As a result, the retained austenite area ratio at the 30° grain boundary can be increased. In addition, when the cumulative rolling reduction in the rolling of final two stands is 20% or more, there is no problem even if the cumulative rolling reduction is high. However, for example, when the cumulative rolling reduction is 60% or more, rolling with a high load in a low temperature range is performed, which causes deterioration of the sheet shape and deterioration of productivity. Thus, preferably, the cumulative rolling reduction in the final two stands is less than 60%.
After completion of the finish rolling, the average cooling rate in the temperature range of the finishing temperature FT to 650°C is more preferably 10 °C/s or faster. By cooling under this condition, formation of coarse ferrite in a high temperature range can be suppressed. As a result, the retained austenite area ratio at the 30° grain boundary can be further increased.
In the present embodiment, the average cooling rate refers to a value obtained by dividing a temperature drop width of the steel sheet from the start of cooling to the completion of cooling by a required time from the start of cooling to the completion of cooling.

(5) Coiling

(6) Retention after coiling

The coiling is preferably performed at a coiling temperature CT that satisfies 500°C or higher and the temperature Tc (°C) represented by the above formulas [1] and [2] or lower. Further, after the coiling, the temperature is preferably retained at the post-coiling retention temperature T that satisfies the coiling temperature CT ±50°C and Tc (°C) or lower for the time tc (h) represented by the above formula [3] or longer. By performing coiling and retention the temperature after coiling under these conditions, the pearlite fraction before annealing can be controlled within a desired range, and the concentration of Mn in cementite in pearlite can be promoted. As a result, the retained austenite area ratio at the 30° grain boundary can be further increased after annealing.
The retention after coiling may be performed by suppressing heat removal using a retention furnace or a heat insulating cover. The coil is discharged to the outside of the furnace, or the heat insulating cover is removed. The temperature of the end surface on the side of the coil side surface is measured with a radiation thermometer at the timing when the coil surface is exposed. The obtained temperature may be regarded as the retention temperature T of retention after coiling.
After retention after coiling, pickling and cold rolling may be performed by an ordinary method as necessary. In the cold rolling, the cumulative rolling reduction may be 50% or more.

(7) Annealing

(a) Heating before first soaking treatment

In the heating before the first soaking treatment, the average heating rate in the temperature range of 600°C to $Ac_1$ +10°C is preferably 10.0 °C/s or slower. By heating under this condition, cementite can be spheroidized while promoting recrystallization of ferrite. As a result, the retained austenite area ratio at the 30° grain boundary can be further increased. The average heating rate in the above temperature range is more preferably 5.0 °C/s or slower.

In the present embodiment, the average heating rate refers to a value obtained by dividing a temperature rise width of the steel sheet from the start of heating to the completion of heating by a required time from the start of heating to the completion of heating.

(b) First soaking treatment

It is preferable to retain the temperature at the maximum heating temperature of $Ac_1$°C +30°C to 900°C for 1 to 1,000 seconds. By performing the first soaking treatment in a temperature range of $Ac_1$°C or higher, a desired amount of ferrite and tempered martensite can be obtained. By performing the first soaking treatment in a temperature range of 900°C or lower, a desired amount of ferrite can be obtained.

(c) Cooling after first soaking treatment (first cooling)

After the soaking treatment, the average cooling rate to a temperature range of 700 to 600°C is preferably 20.0 °C/s or slower. By cooling under this condition, the ferrite-austenite interface can be grown to the austenite side and to the vicinity of the carbide. As a result, the retained austenite area ratio at the 30° grain boundary can be further increased. The average cooling rate to the above temperature range is more preferably 10.0 °C/s or slower.

(d) Second soaking treatment

After the cooling, it is preferable to retain the temperature in a temperature range of 400 to 600°C for 60 to 300 seconds. By performing the second soaking treatment under this condition, the ferrite grain boundary is moved with a weak driving force, and the ferrite grain boundary can be pinned by the spherical carbide. As a result, the retained austenite area ratio at the 30° grain boundary can be further increased. When the second soaking treatment temperature is higher than 600°C, a desired retained austenite area ratio at the 30° grain boundary may not be obtained. When the second soaking treatment temperature is lower than 400°C, bainite may be excessively generated. When the retention time is out of the above range, a desired retained austenite area ratio at the 30° grain boundary may not be obtained.

When the second soaking treatment is performed after immersion in the plating bath, the powdering resistance of the plated layer is significantly deteriorated. This is because when heat treatment is performed in a temperature range of 480°C or higher for 80 seconds or longer after immersion in the plating bath, the alloying reaction between plating and the steel sheet excessively proceeds, and the structure in the plated layer changes from a $\delta$ phase having excellent ductility to a $\Gamma$ phase having poor ductility. Therefore, from the viewpoint of securing powdering resistance, it is desirable to perform the second soaking treatment before immersion in the plating bath.

After the second soaking treatment, a hot-dip galvanized layer is formed on the sheet surface by an ordinary method. For example, the plating bath temperature may be 440 to 470°C, and the immersion time may be 5 seconds or shorter. The plating bath is preferably a hot-dip zinc plating bath containing 0.08 to 0.20 mass% of Al, but the plating bath may contain Fe, Si, Mg, Mn, Cr, Ti, Pb, and the like as impurities. In addition, it is preferable to control the basis weight of plating by a known method such as gas wiping. The basis weight of plating may be 25 to 75 g/m$^2$ per side.

The steel sheet on which the hot-dip galvanized layer has been formed may be subjected to an alloying treatment as necessary, to form a galvannealed layer or a zinc alloy galvannealed layer. In that case, when the alloying temperature is lower than 460°C, not only the alloying rate slows down to impair the productivity, but also unevenness of the alloying treatment occurs. Thus, the alloying temperature is preferably 460°C or higher. The retention time at 460°C or higher is preferably shorter than 80 seconds.

On the other hand, when the alloying temperature exceeds 600°C, alloying may excessively proceed, and the plating adhesion to the steel sheet may be deteriorated. In addition, a desired microstructure may not be obtained due to promotion of pearlitic transformation. Therefore, the alloying temperature is preferably 600°C or lower.

(e) Cooling after second soaking treatment (after formation of plated layer) (second cooling)

Subsequently, it is preferable to cool to a temperature range of higher than 100°C and 300°C or lower. By performing cooling under this condition, a desired amount of retained austenite can be obtained.

(f) Third soaking treatment

After the cooling, it is preferable to retain the temperature in a temperature range of 300 to 420°C for 100 to 1,000 seconds. By performing the third soaking treatment in a temperature range of 300°C or higher, retained austenite can be stabilized, and retained austenite at room temperature can be secured. By performing the third soaking treatment in a temperature range of 420°C or lower, it is possible to suppress excessive decomposition of retained austenite and excessive generation of bainite.

After the third soaking treatment, cooling to room temperature may be performed. For flattening and surface roughness adjustment of the galvanized steel sheet, temper rolling may be performed as necessary.

[Examples]

Next, the effects of one aspect of the present invention will be more specifically described with reference to Examples, but the conditions in Examples are one condition example adopted to confirm the feasibility and effects of the present invention, and the present invention is not limited to this one condition example. The present invention can adopt various conditions as long as the object of the present invention is achieved without departing from the gist of the present invention.

Steels having the chemical compositions shown in Table 1 were melted, and slabs each having a thickness of 240 to 300 mm were manufactured by continuous casting. Using the obtained slabs, galvanized steel sheets (hot-dip galvanized steel sheet, hot-dip zinc alloy galvanized steel sheet, galvannealed steel sheet, or zinc alloy galvannealed steel sheet) shown in Tables 4A to 4C were obtained under the manufacturing conditions shown in Tables 2A to 3C.

After retention the temperature after coiling, pickling and cold rolling were performed by an ordinary method. In the cold rolling, the cumulative rolling reduction was 50% or more. The retention time at the alloying temperature was shorter than 80 seconds. After the third soaking treatment, cooling was performed to room temperature.

The obtained galvanized steel sheets were subjected to microstructure observation, a tensile test, and a three-point bending test by the above-described methods. The obtained measurement results are shown in Tables 4A to 4C.

A case where the tensile strength was 1,180 MPa or more was determined to be acceptable as being a galvanized steel sheet having high strength. On the other hand, a case where the tensile strength was less than 1,180 MPa was determined to be unacceptable as not being a galvanized steel sheet having high strength.

A case where the product (TS × El) of the tensile strength (TS) and the total elongation (El) was 16,500 MPa % or more was determined to be acceptable as being a galvanized steel sheet having high strength and excellent ductility. On the other hand, a case where the product (TS × El) of the tensile strength (TS) and the total elongation (El) was less than 16,500 MPa·% was determined to be unacceptable as not being a galvanized steel sheet having high strength and excellent ductility.

A case where the impact absorbed energy in the three-point bending test was more than 1.0 kJ was determined to be acceptable as being a galvanized steel sheet having excellent impact resistance. On the other hand, a case where the impact absorbed energy in the three-point bending test was 1.0 kJ or less was determined to be unacceptable as not being a galvanized steel sheet having excellent impact resistance.

[Table 1]

| Kind of Steel | Chemical composition (mass%, remainder of Fe and impurities) | | | | | | | | | T1 °C | Ac₁ °C | Note |
|---|---|---|---|---|---|---|---|---|---|---|---|---|
| | C | Si | Mn | sol.Al | P | S | N | O | Others | | | |
| A | 0.160 | 1.400 | 2.65 | 0.031 | 0.012 | 0.002 | 0.003 | 0.001 | | 937 | 748 | Present invention steel |
| B | 0.310 | 1.650 | 2.48 | 0.029 | 0.011 | 0.001 | 0.002 | 0.002 | | 937 | 746 | Present invention steel |
| C | 0.240 | 0.550 | 2.55 | 0.650 | 0.010 | 0.002 | 0.003 | 0.002 | | 937 | 732 | Present invention steel |
| D | 0.200 | 1.780 | 2.62 | 0.027 | 0.010 | 0.002 | 0.004 | 0.001 | Ti: 0.030, B: 0.0020 | 951 | 752 | Present invention steel |
| E | 0.195 | 2.320 | 2.55 | 0.021 | 0.002 | 0.001 | 0.003 | 0.001 | | 937 | 760 | Present invention steel |
| F | 0.185 | 1.800 | 2.60 | 0.023 | 0.011 | 0.001 | 0.003 | 0.001 | | 938 | 753 | Present invention steel |
| G | 0.198 | 1.250 | 1.75 | 0.030 | 0.011 | 0.001 | 0.003 | 0.001 | | 937 | 743 | Present invention steel |
| H | 0.220 | 0.780 | 2.66 | 0.680 | 0.010 | 0.001 | 0.003 | 0.002 | | 951 | 737 | Present invention steel |
| I | 0.165 | 1.850 | 3.90 | 0.030 | 0.012 | 0.001 | 0.003 | 0.002 | Ti: 0.030, B: 0.0020 | 937 | 757 | Present invention steel |
| J | 0.220 | 1.650 | 2.58 | 0.043 | 0.010 | 0.002 | 0.004 | 0.001 | Ti: 0.100 | 954 | 750 | Present invention steel |
| K | 0.199 | 1.780 | 2.57 | 0.030 | 0.011 | 0.001 | 0.003 | 0.001 | Nb: 0.015 | 990 | 752 | Present invention steel |
| L | 0.220 | 1.610 | 2.49 | 0.031 | 0.010 | 0.002 | 0.004 | 0.001 | V: 0.030 | 937 | 749 | Present invention steel |
| M | 0.205 | 1.550 | 2.38 | 0.027 | 0.010 | 0.001 | 0.002 | 0.001 | Cu: 0.18 | 937 | 745 | Present invention steel |
| N | 0.187 | 1.42 | 2.02 | 0.030 | 0.011 | 0.001 | 0.002 | 0.001 | Cr: 0.63 | 937 | 757 | Present invention steel |
| O | 0.209 | 1.610 | 2.47 | 0.030 | 0.012 | 0.001 | 0.001 | 0.002 | Mo: 0.10 | 937 | 752 | Present invention steel |
| P | 0.175 | 1.245 | 1.65 | 0.030 | 0.015 | 0.002 | 0.001 | 0.001 | Ni: 1.10 | 937 | 728 | Present invention steel |
| Q | 0.195 | 1.580 | 2.56 | 0.020 | 0.012 | 0.001 | 0.001 | 0.001 | Ca: 0.0110 | 937 | 749 | Present invention steel |
| R | 0.203 | 1.440 | 2.81 | 0.032 | 0.011 | 0.001 | 0.001 | 0.001 | Mg: 0.0130 | 937 | 747 | Present invention steel |
| S | 0.174 | 1.250 | 2.34 | 0.030 | 0.012 | 0.002 | 0.001 | 0.001 | REM: 0.0500 | 937 | 745 | Present invention steel |
| T | 0.210 | 1.550 | 2.54 | 0.030 | 0.010 | 0.002 | 0.001 | 0.002 | Bi: 0.0100 | 937 | 748 | Present invention steel |
| U | 0.199 | 1.620 | 2.49 | 0.025 | 0.009 | 0.002 | 0.001 | 0.001 | Zr: 0.0018 | 937 | 750 | Present invention steel |
| V | 0.174 | 1.710 | 2.35 | 0.025 | 0.012 | 0.001 | 0.001 | 0.002 | Co: 0.0021 | 937 | 751 | Present invention steel |
| W | 0.203 | 1.351 | 2.45 | 0.030 | 0.011 | 0.001 | 0.002 | 0.002 | Zn: 0.0100 | 937 | 745 | Present invention steel |
| X | 0.223 | 1.711 | 2.50 | 0.030 | 0.011 | 0.002 | 0.001 | 0.002 | W: 0.0300 | 937 | 750 | Present invention steel |

(continued)

| Kind of Steel | Chemical composition (mass%, remainder of Fe and impurities) | | | | | | | | | T1 °C | Ac$_1$ °C | Note |
|---|---|---|---|---|---|---|---|---|---|---|---|---|
| | C | Si | Mn | sol.Al | P | S | N | O | Others | | | |
| Y | 0.231 | 1.487 | 2.39 | 0.031 | 0.012 | 0.001 | 0.002 | 0.002 | Sn: 0.090 | 937 | 746 | Present invention steel |
| Z | 0.431 | 1.550 | 2.44 | 0.030 | 0.010 | 0.002 | 0.001 | 0.001 | | 937 | 741 | Comparative steel |
| AA | 0.125 | 1.700 | 2.59 | 0.031 | 0.010 | 0.002 | 0.001 | 0.001 | | 937 | 753 | Comparative steel |
| AB | 0.154 | 0.050 | 2.78 | 0.350 | 0.022 | 0.001 | 0.001 | 0.002 | B: 0.0020 | 946 | 728 | Comparative steel |
| AC | 0.214 | 1.350 | 5.00 | 0.258 | 0.012 | 0.001 | 0.001 | 0.002 | | 937 | 750 | Comparative steel |
| AD | 0.198 | 1.542 | 1.31 | 0.321 | 0.010 | 0.001 | 0.002 | 0.001 | | 937 | 746 | Comparative steel |
| The underline indicates that the value is out of the range of the present invention. | | | | | | | | | | | | |

[Table 2A]

| Sample No. | Kind of Steel | Slab heating Heating temperature °C | Slab width reduction rolling Rolling reduction % | Rolling temperature °C | Rough rolling Minimum rolling temperature of final three stands °C | Minimum rolling reduction of final three stands % | Retention Retention time after completion of rough rolling and before start of finish rolling in temperature range of 1000°C or higher s | Finish rolling Cumulative rolling reduction in temperature range of T1°C or higher % | Cumulative rolling reduction of final two stands % | Finishing temperature FT °C | T1 °C | Average cooling rate in temperature range of FT to 650°C °C/s | Coiling Coiling temperature CT °C | Tc °C | Retention Retention temperature after coiling T °C | Retention time h | tc h | Note |
|---|---|---|---|---|---|---|---|---|---|---|---|---|---|---|---|---|---|---|
| 1 | A | 1230 | 5 | 1214 | 1150 | 28 | 65 | 83 | 29 | 905 | 937 | 63 | 580 | 591 | 575 | 2.1 | 1.7 | Present invention example |
| 2 | A | 1245 | 15 | 1225 | 1158 | 25 | 70 | 80 | 25 | 890 | 937 | 75 | 579 | 591 | 568 | 2.5 | 1.7 | Present invention example |
| 3 | A | 1245 | 9 | 1225 | 1140 | 26 | 78 | 89 | 26 | 895 | 937 | 81 | 579 | 591 | 570 | 2.4 | 1.7 | Present invention example |
| 4 | A | 1220 | 4 | 1210 | 1145 | 25 | 70 | 81 | 25 | 899 | 937 | 45 | 575 | 591 | 565 | 2.5 | 1.8 | Comparative example |
| 5 | A | 1245 | 8 | 1223 | 1145 | 25 | 80 | 80 | 31 | 897 | 937 | 75 | 581 | 591 | 568 | 3.1 | 1.8 | Comparative example |
| 6 | A | 1225 | 8 | 1210 | 1130 | 25 | 60 | 82 | 26 | 910 | 937 | 80 | 578 | 591 | 570 | 2.4 | 1.8 | Comparative example |
| 7 | A | 1225 | 8 | 1218 | 1145 | 28 | 80 | 79 | 27 | 900 | 937 | 75 | 568 | 591 | 554 | 2.4 | 2.0 | Comparative example |
| 8 | B | 1230 | 8 | 1215 | 1148 | 32 | 71 | 90 | 32 | 900 | 937 | 54 | 658 | 771 | 631 | 2.5 | 1.5 | Present invention example |
| 9 | B | 1240 | 14 | 1230 | 1138 | 28 | 66 | 79 | 29 | 901 | 937 | 66 | 642 | 771 | 625 | 2.3 | 1.5 | Present invention example |
| 10 | B | 1220 | 7 | 1205 | 1135 | 28 | 85 | 83 | 27 | 905 | 937 | 75 | 671 | 771 | 653 | 2.6 | 1.8 | Comparative example |
| 11 | B | _1219_ | 5 | 1215 | 1131 | 27 | 90 | 89 | 27 | 895 | 937 | 75 | 630 | 771 | 615 | 3.2 | 1.4 | Comparative example |
| 12 | B | 1245 | 8 | 1220 | 1125 | 24 | 80 | 81 | 24 | 900 | 937 | 80 | 680 | 771 | 654 | 2.5 | 1.8 | Comparative example |
| 13 | B | 1245 | 6 | 1230 | 1137 | 28 | 86 | 92 | _18_ | 906 | 937 | 75 | 645 | 771 | 631 | 2.8 | 1.5 | Comparative example |
| 14 | C | 1240 | 5 | 1230 | 1132 | 26 | 83 | 80 | 26 | 890 | 937 | 58 | 625 | 666 | 615 | 2.3 | 1.3 | Present invention example |
| 15 | C | 1250 | 18 | 1220 | 1156 | 39 | 91 | 83 | 31 | 889 | 937 | 82 | 615 | 666 | 600 | 2.1 | 1.3 | Present invention example |
| 16 | C | 1235 | 6 | 1215 | 1128 | 28 | 75 | 78 | 24 | 900 | 937 | 65 | 615 | 666 | 598 | 2.2 | 1.4 | Comparative example |
| 17 | C | 1235 | 7 | 1220 | 1115 | 24 | 75 | 79 | 27 | 903 | 937 | 75 | 630 | 666 | 605 | 2.3 | 1.4 | Comparative example |
| 18 | C | 1225 | 7 | 1215 | 1125 | 24 | 90 | 78 | 29 | 895 | 937 | 50 | 635 | 666 | 618 | 2.6 | 1.3 | Comparative example |
| 19 | C | _1215_ | 8 | 1208 | 1127 | 29 | 85 | 79 | 24 | 910 | 937 | 88 | 615 | 666 | 605 | 2.2 | 1.4 | Comparative example |
| 20 | C | 1225 | 8 | 1220 | 1125 | 23 | 95 | 81 | 25 | 900 | 937 | 70 | 615 | 666 | 602 | 2.3 | 1.4 | Comparative example |

The underline indicates that the manufacturing condition is not preferable.

[Table 2B]

| Sample No. | Kind of Steel | Slab heating Heating temperature °C | Slab width reduction rolling Rolling reduction % | Rolling temperature °C | Rough rolling Minimum rolling temperature of final three stands °C | Minimum rolling reduction of final three stands % | Retention Retention time after completion of rough rolling and before start of finish rolling in temperature range of 1,000°C or higher s | Finish rolling Cumulative rolling reduction in temperature range of T1°C or higher % | Cumulative rolling reduction of final two stands % | Finishing temperature FT °C | T1 °C | Average cooling rate in temperature range of FT to 650°C °C/s | Coiling Coiling temperature CT °C | Tc °C | Retention Retention temperature after coiling T °C | Retention time h | tc h | Note |
|---|---|---|---|---|---|---|---|---|---|---|---|---|---|---|---|---|---|---|
| 21 | D | 1240 | 5 | 1215 | 1125 | 28 | 55 | 91 | 33 | 905 | 951 | 61 | 580 | 646 | 578 | 6.1 | 4.2 | Present invention example |
| 22 | D | 1250 | 21 | 1230 | 1145 | 25 | 75 | 88 | 28 | 889 | 951 | 70 | 600 | 646 | 578 | 4.8 | 4.1 | Present invention example |
| 23 | D | 1223 | 8 | 1210 | _1068_ | 26 | 64 | 85 | 27 | 900 | 951 | 55 | 590 | 646 | 568 | 5.3 | 4.6 | Comparative example |
| 24 | D | 1234 | 6 | 1208 | 1108 | 27 | 58 | 85 | 31 | 894 | 951 | 49 | 641 | 646 | _550_ | 6.1 | 5.7 | Comparative example |
| 25 | E | 1240 | 6 | 1211 | 1119 | 35 | 68 | 86 | 29 | 910 | 937 | 58 | 610 | 651 | 600 | 2.6 | 1.7 | Present invention example |
| 26 | E | 1240 | 15 | 1210 | 1139 | 25 | 70 | 83 | 26 | 900 | 937 | 65 | 590 | 651 | 575 | 2.7 | 2.4 | Present invention example |
| 27 | E | 1250 | 8 | 1225 | 1132 | 28 | 70 | 81 | 28 | 908 | 937 | 66 | 599 | 651 | 578 | 2.6 | 2.3 | Comparative example |
| 28 | F | 1240 | 0 | 1231 | 1132 | 29 | 75 | 78 | 24 | 890 | 938 | 62 | 588 | 629 | 581 | 2.2 | 1.7 | Present invention example |
| 29 | F | 1250 | 5 | 1220 | 1128 | _11_ | 80 | 77 | 25 | 895 | 938 | 77 | 605 | 629 | 591 | 2.7 | 1.6 | Comparative example |
| 30 | F | 1230 | 4 | 1215 | 1125 | 25 | 80 | 81 | 25 | 905 | 938 | 75 | _680_ | 629 | _671_ | 2.3 | 1.9 | Comparative example |
| 31 | G | 1240 | 5 | 1220 | 1147 | 24 | 55 | 77 | 28 | 895 | 937 | 49 | 590 | 626 | 586 | 2.4 | 1.6 | Present invention example |
| 32 | G | 1245 | 16 | 1225 | 1155 | 27 | 65 | 78 | 30 | 896 | 937 | 73 | 596 | 626 | 581 | 3.1 | 1.6 | Present invention example |
| 33 | G | 1240 | 4 | 1230 | 1156 | 24 | _8_ | 81 | 23 | 903 | 937 | 40 | 580 | 626 | 575 | 2.3 | 1.7 | Comparative example |
| 34 | G | 1235 | 8 | 1211 | 1135 | 25 | 67 | 82 | 31 | _851_ | 937 | 103 | 598 | 626 | 586 | 2.1 | 1.4 | Comparative example |
| 35 | G | 1235 | 5 | 1214 | 1131 | 23 | 68 | 79 | 26 | 900 | 937 | 59 | 600 | 626 | 587 | _1.1_ | 1.6 | Comparative example |
| 36 | H | 1250 | 4 | 1225 | 1156 | 28 | 65 | 93 | 38 | 895 | 951 | 51 | 612 | 648 | 587 | 4.6 | 3.3 | Present invention example |
| 37 | I | 1230 | 5 | 1206 | 1136 | 26 | 54 | 84 | 33 | 905 | 937 | 55 | 585 | 617 | 581 | 2.3 | 1.4 | Present invention example |
| 38 | I | 1230 | 18 | 1206 | 1145 | 25 | 66 | 81 | 29 | 905 | 937 | 65 | 600 | 617 | 584 | 3.2 | 1.4 | Present invention example |
| 39 | I | 1228 | 7 | 1215 | 1131 | 25 | 75 | _68_ | 31 | 895 | 937 | 66 | 600 | 617 | 591 | 2.3 | 1.3 | Comparative example |
| 40 | J | 1250 | 7 | 1221 | 1134 | 33 | 56 | 86 | 29 | 901 | 954 | 49 | 600 | 666 | 595 | 2.1 | 1.4 | Present invention example |

The underline indicates that the manufacturing condition is not preferable.

[Table 2C]

| Sample No. | Kind of Steel | Slab heating Heating temperature °C | Slab width reduction rolling Rolling reduction % | Slab width reduction rolling Rolling temperature °C | Rough rolling Minimum rolling temperature of final three stands °C | Rough rolling Minimum rolling reduction of final three stands % | Retention Retention time after completion of rough rolling and before start of finish rolling in temperature range of 1,000°C or higher s | Finish rolling Cumulative rolling reduction in temperature range of T1°C or higher % | Finish rolling Cumulative rolling reduction of final two stands % | Finish rolling Finishing temperature FT °C | Finish rolling T1 °C | Finish rolling Average cooling rate in temperature range of FT to 650°C °C/s | Coiling Coiling temperature CT °C | Coiling Tc °C | Retention Retention temperature after coiling T °C | Retention Retention time h | tc h | Note |
|---|---|---|---|---|---|---|---|---|---|---|---|---|---|---|---|---|---|---|
| 41 | K | 1250 | 5 | 1225 | 1152 | 25 | 68 | 82 | 26 | 921 | 990 | 52 | 615 | 645 | 593 | 2.2 | 1.4 | Present invention example |
| 42 | L | 1240 | 6 | 1220 | 1141 | 24 | 83 | 79 | 25 | 902 | 937 | 45 | 620 | 665 | 607 | 2.1 | 1.4 | Present invention example |
| 43 | M | 1240 | 5 | 1215 | 1133 | 23 | 71 | 81 | 32 | 903 | 937 | 83 | 610 | 645 | 584 | 2.1 | 1.6 | Present invention example |
| 44 | N | 1250 | 8 | 1220 | 1128 | 25 | 66 | 76 | 27 | 899 | 937 | 105 | 584 | 618 | 578 | 2.5 | 1.7 | Present invention example |
| 45 | O | 1240 | 7 | 1225 | 1145 | 21 | 58 | 79 | 29 | 906 | 937 | 85 | 595 | 652 | 568 | 2.3 | 1.8 | Present invention example |
| 46 | P | 1240 | 5 | 1220 | 1132 | 28 | 93 | 88 | 27 | 890 | 937 | 42 | 576 | 598 | 574 | 2.4 | 1.8 | Present invention example |
| 47 | Q | 1240 | 7 | 1215 | 1135 | 25 | 75 | 91 | 32 | 897 | 937 | 66 | 600 | 636 | 583 | 2.3 | 1.5 | Present invention example |
| 48 | R | 1250 | 6 | 1230 | 1165 | 25 | 71 | 86 | 27 | 900 | 937 | 62 | 589 | 644 | 578 | 2.6 | 1.5 | Present invention example |
| 49 | S | 1240 | 8 | 1220 | 1141 | 32 | 68 | 81 | 29 | 904 | 937 | 45 | 575 | 602 | 558 | 2.5 | 1.9 | Present invention example |
| 50 | T | 1250 | 5 | 1215 | 1155 | 28 | 73 | 88 | 27 | 900 | 937 | 83 | 608 | 652 | 595 | 2.4 | 1.4 | Present invention example |
| 51 | U | 1240 | 7 | 1220 | 1132 | 26 | 59 | 89 | 26 | 888 | 937 | 77 | 635 | 641 | 613 | 2.6 | 1.3 | Present invention example |
| 52 | V | 1240 | 5 | 1220 | 1142 | 27 | 61 | 93 | 33 | 891 | 937 | 64 | 600 | 612 | 589 | 2.7 | 1.7 | Present invention example |
| 53 | W | 1250 | 5 | 1230 | 1109 | 29 | 71 | 79 | 26 | 876 | 937 | 81 | 598 | 639 | 594 | 2.4 | 1.3 | Present invention example |
| 54 | X | 1240 | 5 | 1220 | 1152 | 27 | 66 | 84 | 33 | 892 | 937 | 55 | 635 | 671 | 621 | 2.8 | 1.3 | Present invention example |
| 55 | Y | 1240 | 4 | 1215 | 1143 | 26 | 64 | 79 | 41 | 902 | 937 | 49 | 615 | 674 | 598 | 2.4 | 1.4 | Present invention example |
| 56 | Z̲ | 1250 | 6 | 1230 | 1123 | 24 | 71 | 90 | 26 | 899 | 937 | 58 | 651 | 910 | 631 | 2.9 | 1.6 | Comparative example |
| 57 | A̲A̲ | 1240 | 4 | 1220 | 1151 | 28 | 63 | 84 | 31 | 903 | 937 | 61 | 580̲ | 556 | 561̲ | 3.2 | 2.5 | Comparative example |
| 58 | A̲B̲ | 1250 | 5 | 1215 | 1134 | 27 | 74 | 86 | 25 | 894 | 946 | 55 | 594̲ | 556 | 568̲ | 4.5 | 3.4 | Comparative example |
| 59 | A̲C̲ | 1240 | 5 | 1210 | 1126 | 25 | 61 | 88 | 21 | 893 | 937 | 51 | 631 | 672 | 619 | 3.5 | 2.2 | Comparative example |
| 60 | A̲D̲ | 1250 | 6 | 1230 | 1143 | 24 | 55 | 80 | 28 | 901 | 937 | 49 | 610 | 628 | 598 | 2.4 | 1.7 | Comparative example |
| 61 | A | 1235 | 5 | 1213 | 1144 | 33 | 89 | 84 | 27 | 909 | 941 | 62 | 584 | 591 | 582 | 3.9 | 1.6 | Present invention example |
| 62 | B | 1233 | 7 | 1212 | 1132 | 25 | 72 | 83 | 32 | 898 | 951 | 71 | 627 | 771 | 590 | 3.9 | 1.3 | Present invention example |

| Sample No. | Kind of Steel | Slab heating Heating temperature °C | Slab width reduction rolling Rolling reduction % | Slab width reduction rolling Rolling temperature °C | Rough rolling Minimum rolling temperature of final three stands °C | Rough rolling Minimum rolling reduction of final three stands % | Retention Retention time after completion of rough rolling and before start of finish rolling in temperature range of 1,000°C or higher s | Finish rolling Cumulative rolling reduction in temperature range of T1°C or higher % | Finish rolling Cumulative rolling reduction of final two stands % | Finish rolling Finishing temperature FT °C | Finish rolling T1 °C | Finish rolling Average cooling rate in temperature range of FT to 650°C °C/s | Coiling Coiling temperature CT °C | Coiling Tc °C | Retention Retention temperature after coiling T °C | Retention Retention time h | tc h | Note |
|---|---|---|---|---|---|---|---|---|---|---|---|---|---|---|---|---|---|---|
| 63 | C | 1226 | 8 | 1227 | 1150 | 30 | 57 | 79 | 33 | 891 | 943 | 53 | 630 | 666 | 642 | 3.1 | 1.3 | Comparative example |
| 64 | D | 1237 | 8 | 1211 | 1132 | 30 | 57 | 83 | 24 | 901 | 946 | 79 | 619 | 646 | 585 | 4.9 | 3.9 | Present invention example |
| 65 | E | 1230 | 5 | 1219 | 1132 | 25 | 65 | 86 | 31 | 893 | 949 | 79 | 630 | 651 | 612 | 4.8 | 1.4 | Present invention example |
| 66 | F | 1223 | 6 | 1209 | 1121 | 27 | 71 | 84 | 30 | 889 | 950 | 63 | 616 | 629 | 601 | 2.6 | 1.4 | Present invention example |
| 67 | B | 1247 | 9 | 1227 | 1137 | 32 | 77 | 91 | 26 | 892 | 937 | 51 | 589 | 626 | 581 | 4 | 1.6 | Present invention example |

The underline indicates that the manufacturing condition is not preferable.

[Table 3A]

| Sample No. | Kind of Steel | Ac$_1$ °C | Heating | First soaking treatment | | First cooling | Second soaking treatment | | Alloying | Second cooling | Third soaking treatment | | Note |
|---|---|---|---|---|---|---|---|---|---|---|---|---|---|
| | | | Average heating rate in temperature range of 600°C to Ac$_1$ +10°C °C/s | Retention temperature °C | Retention time s | Average cooling rate in temperature range of 700 to 600°C °C/s | Retention temperature °C | Retention time s | Alloying temperature °C | Cooling stop temperature °C | Retention temperature °C | Retention time s | |
| 1 | A | 748 | 2.2 | 864 | 75 | 2.8 | 476 | 120 | 498 | 230 | 380 | 120 | Present invention example |
| 2 | A | 748 | 1.9 | 863 | 75 | 3.1 | 500 | 180 | 500 | 200 | 400 | 180 | Present invention example |
| 3 | A | 748 | 3.5 | 835 | 90 | 3.6 | 495 | 100 | None | 235 | 410 | 150 | Present invention example |
| 4 | A | 748 | <u>25.0</u> | 855 | 80 | 3.5 | 505 | 100 | 500 | 240 | 400 | 250 | Comparative example |
| 5 | A | 748 | 3.5 | <u>770</u> | 80 | 3.3 | 450 | 100 | 505 | 250 | 380 | 120 | Comparative example |
| 6 | A | 748 | 3.5 | 870 | 60 | 3.4 | 500 | <u>40</u> | 500 | 200 | 410 | 100 | Comparative example |
| 7 | A | 748 | 3.5 | 875 | 120 | 3.1 | 500 | 150 | 520 | 150 | <u>280</u> | 130 | Comparative example |
| 8 | B | 746 | 1.9 | 810 | 120 | 3.1 | 534 | 130 | 493 | 180 | 400 | 210 | Present invention example |
| 9 | B | 746 | 2.4 | 805 | 120 | 2.9 | 540 | 150 | 515 | 200 | 380 | 200 | Present invention example |

| Sample No. | Kind of Steel | Ac$_1$ °C | Heating — Average heating rate in temperature range of 600°C to Ac$_1$+10°C °C/s | First soaking treatment — Retention temperature °C | Retention time s | First cooling — Average cooling rate in temperature range of 700 to 600°C °C/s | Second soaking treatment — Retention temperature °C | Retention time s | Alloying — Alloying temperature °C | Second cooling — Cooling stop temperature °C | Third soaking treatment — Retention temperature °C | Retention time s | Note |
|---|---|---|---|---|---|---|---|---|---|---|---|---|---|
| 10 | B | 746 | 2.6 | 920 | 110 | 8.5 | 500 | 80 | 500 | 150 | 400 | 180 | Comparative example |
| 11 | B | 746 | 3.2 | 808 | 150 | 3.1 | 500 | 150 | 500 | 350 | 400 | 150 | Comparative example |
| 12 | B | 746 | 2.8 | 800 | 120 | 4.1 | 510 | 120 | 500 | 190 | 480 | 220 | Comparative example |
| 13 | B | 746 | 2.8 | 805 | 100 | 2.8 | 520 | 150 | 500 | 180 | 400 | 200 | Comparative example |
| 14 | C | 732 | 2.1 | 824 | 95 | 1.9 | 548 | 100 | 503 | 220 | 415 | 165 | Present invention example |
| 15 | C | 732 | 2.5 | 835 | 95 | 2.3 | 543 | 145 | 498 | 230 | 420 | 200 | Present invention example |
| 16 | C | 732 | 4.8 | 830 | 120 | 35.0 | 510 | 120 | 495 | 120 | 400 | 150 | Comparative example |
| 17 | C | 732 | 3.5 | 815 | 89 | 6.4 | 385 | 120 | 490 | 220 | 400 | 130 | Comparative example |
| 18 | C | 732 | 1.2 | 835 | 250 | 2.5 | 520 | 450 | 503 | 220 | 400 | 315 | Comparative example |
| 19 | C | 732 | 2.8 | 841 | 120 | 2.4 | 550 | 120 | 490 | 200 | 395 | 180 | Comparative example |

EP 4 438 756 A1

21

| Sample No. | Kind of Steel | Ac$_1$ °C | Heating | First soaking treatment | | First cooling | Second soaking treatment | | Alloying | Second cooling | Third soaking treatment | | Note |
|---|---|---|---|---|---|---|---|---|---|---|---|---|---|
| | | | Average heating rate in temperature range of 600°C to Ac$_1$ +10°C °C/s | Retention temperature °C | Retention time s | Average cooling rate in temperature range of 700 to 600°C °C/s | Retention temperature °C | Retention time s | Alloying temperature °C | Cooling stop temperature °C | Retention temperature °C | Retention time s | |
| 20 | C | 732 | 3.2 | 915 | 120 | 8.5 | 500 | 100 | 520 | 270 | 400 | 150 | Comparative example |

The underline indicates that the manufacturing condition is not preferable.

EP 4 438 756 A1

[Table 3B]

| Sample No. | Kind of Steel | Ac$_1$ °C | Heating | First soaking treatment | | First cooling | Second soaking treatment | | Alloying | Second cooling | Third soaking treatment | | Note |
|---|---|---|---|---|---|---|---|---|---|---|---|---|---|
| | | | Average heating rate in temperature range of 600°C to Ac$_1$ +10°C °C/s | Retention temperature °C | Retention time s | Average cooling rate in temperature range of 700 to 600°C °C/s | Retention temperature °C | Retention time s | Alloying temperature °C | Cooling stop temperature °C | Retention temperature °C | Retention time s | |
| 21 | D | 752 | 2.3 | 850 | 90 | 3.2 | 545 | 100 | 501 | 230 | 400 | 185 | Present invention example |
| 22 | D | 752 | 3.2 | 855 | 90 | 3.5 | 532 | 205 | 512 | 245 | 400 | 235 | Present invention example |
| 23 | D | 752 | 2.3 | 845 | 120 | 4.1 | 550 | 120 | 500 | 210 | 400 | 180 | Comparative example |
| 24 | D | 752 | 2.0 | 840 | 120 | 3.5 | 550 | 120 | 480 | 235 | 390 | 150 | Comparative example |
| 25 | E | 760 | 2.1 | 853 | 88 | 4.3 | 526 | 115 | 482 | 215 | 410 | 240 | Present invention example |
| 26 | E | 760 | 2.7 | 831 | 88 | 2.8 | 511 | 185 | 500 | 230 | 400 | 200 | Present invention example |
| 27 | E | 760 | 2.1 | 845 | 105 | 3.2 | 630 | 125 | 500 | 180 | 400 | 200 | Comparative example |
| 28 | F | 753 | 2.9 | 848 | 65 | 3.6 | 579 | 100 | 490 | 220 | 400 | 200 | Present invention example |
| 29 | F | 753 | 3.2 | 855 | 76 | 5.4 | 550 | 120 | 500 | 210 | 410 | 180 | Comparative example |

(continued)

| Sample No. | Kind of Steel | Ac$_1$ °C | Heating: Average heating rate in temperature range of 600°C to Ac$_1$ +10°C °C/s | First soaking treatment: Retention temperature °C | First soaking treatment: Retention time s | First cooling: Average cooling rate in temperature range of 700 to 600°C °C/s | Second soaking treatment: Retention temperature °C | Second soaking treatment: Retention time s | Alloying: Alloying temperature °C | Second cooling: Cooling stop temperature °C | Third soaking treatment: Retention temperature °C | Third soaking treatment: Retention time s | Note |
|---|---|---|---|---|---|---|---|---|---|---|---|---|---|
| 30 | F | 753 | 3.5 | 850 | 80 | 5.6 | 520 | 180 | 500 | 220 | 400 | 210 | Comparative example |
| 31 | G | 743 | 1.9 | 815 | 153 | 2.8 | 530 | 120 | 505 | 250 | 395 | 190 | Present invention example |
| 32 | G | 743 | 2.2 | 841 | 153 | 5.1 | 515 | 155 | 500 | 255 | 385 | 180 | Present invention example |
| 33 | G | 743 | 2.4 | 825 | 120 | 2.8 | 450 | 70 | 490 | 200 | 395 | 150 | Comparative example |
| 34 | G | 743 | 1.9 | 823 | 123 | 3.2 | 500 | 150 | 490 | 200 | 400 | 150 | Comparative example |
| 35 | G | 743 | 2.6 | 825 | 130 | 4.5 | 515 | 150 | 500 | 250 | 395 | 180 | Comparative example |
| 36 | H | 737 | 2.3 | 820 | 88 | 2.5 | 515 | 180 | 492 | 190 | 400 | 215 | Present invention example |
| 37 | I | 757 | 2.4 | 865 | 79 | 3.4 | 496 | 110 | 507 | 200 | 410 | 200 | Present invention example |
| 38 | I | 757 | 3.1 | 855 | 79 | 9.1 | 506 | 140 | 498 | 215 | 405 | 200 | Present invention example |

(continued)

| Sample No. | Kind of Steel | Ac$_1$ °C | Heating | First soaking treatment | | First cooling | Second soaking treatment | | Alloying | Second cooling | Third soaking treatment | | Note |
| | | | Average heating rate in temperature range of 600°C to Ac$_1$ +10°C °C/s | Retention temperature °C | Retention time s | Average cooling rate in temperature range of 700 to 600°C °C/s | Retention temperature °C | Retention time s | Alloying temperature °C | Cooling stop temperature °C | Retention temperature °C | Retention time s | |
|---|---|---|---|---|---|---|---|---|---|---|---|---|---|
| 39 | I | 757 | 3.5 | 840 | 80 | 3.6 | 505 | 100 | 496 | 190 | 395 | 150 | Comparative example |
| 40 | J | 750 | 2.3 | 838 | 98 | 3.6 | 508 | 115 | 478 | 230 | 380 | 150 | Present invention example |

The underline indicates that the manufacturing condition is not preferable.

[Table 3C]

| Sample No. | Kind of Steel | Ac$_1$ °C | Heating — Average heating rate in temperature range of 600°C to Ac$_1$ +10°C °C/s | First soaking treatment — Retention temperature °C | First soaking treatment — Retention time s | First cooling — Average cooling rate in temperature range of 700 to 600°C °C/s | Second soaking treatment — Retention temperature °C | Second soaking treatment — Retention time s | Alloying — Alloying temperature °C | Second cooling — Cooling stop temperature °C | Third soaking treatment — Retention temperature °C | Third soaking treatment — Retention time s | Note |
|---|---|---|---|---|---|---|---|---|---|---|---|---|---|
| 41 | K | 752 | 2.3 | 845 | 89 | 3.1 | 510 | 265 | 485 | 215 | 400 | 180 | Present invention example |
| 42 | L | 749 | 1.8 | 820 | 102 | 2.7 | 506 | 110 | 505 | 220 | 350 | 200 | Present invention example |
| 43 | M | 745 | 2.2 | 830 | 98 | 1.7 | 498 | 100 | 494 | 230 | 410 | 210 | Present invention example |
| 44 | N | 757 | 1.9 | 850 | 115 | 2.6 | 504 | 100 | 491 | 240 | 385 | 230 | Present invention example |
| 45 | O | 752 | 2.5 | 842 | 81 | 2.5 | 528 | 195 | 487 | 200 | 400 | 145 | Present invention example |
| 46 | P | 728 | 2.1 | 830 | 79 | 2.1 | 551 | 120 | 511 | 260 | 395 | 150 | Present invention example |
| 47 | Q | 749 | 2.6 | 855 | 82 | 3.6 | 546 | 150 | 501 | 230 | 415 | 180 | Present invention example |
| 48 | R | 747 | 3.2 | 858 | 85 | 4.1 | 535 | 215 | 504 | 220 | 390 | 200 | Present invention example |

| Sample No. | Kind of Steel | $Ac_1$ °C | Heating Average healing rate in temperature range of 600°C to $Ac_1$ +10°C °C/s | First soaking treatment Retention temperature °C | Retention time s | First cooling Average cooling rate in temperature range of 700 to 600°C °C/s | Second soaking treatment Retention temperature °C | Retention time s | Alloying Alloying temperature °C | Second cooling Cooling stop temperature °C | Third soaking treatment Retention temperature °C | Retention time s | Note |
|---|---|---|---|---|---|---|---|---|---|---|---|---|---|
| 49 | S | 745 | 2.5 | 846 | 93 | 1.9 | 489 | 200 | 509 | 235 | 400 | 210 | Present invention example |
| 50 | T | 748 | 2.3 | 835 | 96 | 2.2 | 439 | 130 | 501 | 220 | 410 | 230 | Present invention example |
| 51 | U | 750 | 2.1 | 850 | 106 | 2.5 | 549 | 155 | 486 | 245 | 390 | 140 | Present invention example |
| 52 | V | 751 | 2.4 | 866 | 113 | 2.6 | 532 | 130 | 488 | 250 | 370 | 200 | Present invention example |
| 53 | W | 745 | 2.5 | 845 | 85 | 2.7 | 496 | 120 | 507 | 230 | 380 | 200 | Present invention example |
| 54 | X | 750 | 2.1 | 839 | 98 | 3.1 | 537 | 100 | 493 | 215 | 400 | 180 | Present invention example |
| 55 | Y | 746 | 1.9 | 832 | 100 | 3.5 | 551 | 150 | 501 | 220 | 410 | 150 | Present invention example |
| 56 | Z̲ | 741 | 2.1 | 851 | 118 | 3.4 | 548 | 100 | 505 | 180 | 405 | 200 | Comparative example |

(continued)

EP 4 438 756 A1

| Sample No. | Kind of Steel | Ac$_1$ °C | Heating — Average healing rate in temperature range of 600°C to Ac$_1$ +10°C °C/s | First soaking treatment — Retention temperature °C | Retention time s | First cooling — Average cooling rate in temperature range of 700 to 600°C °C/s | Second soaking treatment — Retention temperature °C | Retention time s | Alloying — Alloying temperature °C | Second cooling — Cooling stop temperature °C | Third soaking treatment — Retention temperature °C | Retention time s | Note |
|---|---|---|---|---|---|---|---|---|---|---|---|---|---|
| 57 | AA | 753 | 2.2 | 895 | 86 | 2.6 | 519 | 110 | 495 | 260 | 395 | 230 | Comparative example |
| 58 | AB | 728 | 2.2 | 855 | 88 | 2.6 | 573 | 150 | 481 | 260 | 410 | 210 | Comparative example |
| 59 | AC | 750 | 2.3 | 849 | 83 | 2.7 | 518 | 120 | 505 | 200 | 395 | 240 | Comparative example |
| 60 | AD | 746 | 2.1 | 850 | 90 | 3.2 | 543 | 125 | 490 | 260 | 400 | 210 | Comparative example |
| 61 | A | 748 | 2.3 | 888 | 124 | 8.3 | 528 | 102 | 502 | 157 | 384 | 206 | Present invention example |
| 62 | B | 746 | 2.9 | 783 | 102 | 5.6 | 494 | 165 | 490 | 156 | 374 | 222 | Present invention example |
| 63 | C | 732 | 2.9 | 758 | 104 | 7.1 | 546 | 122 | 489 | 239 | 401 | 239 | Comparative example |
| 64 | D | 752 | 1.9 | 863 | 120 | 8.0 | 482 | 179 | 482 | 197 | 378 | 157 | Present invention example |
| 65 | E | 760 | 3.1 | 881 | 103 | 18.7 | 547 | 181 | 514 | 131 | 363 | 131 | Present invention example |

28

(continued)

| Sample No. | Kind of Steel | Ac$_1$ °C | Heating | First soaking treatment | | First cooling | Second soaking treatment | | Alloying | Second cooling | Third soaking treatment | | Note |
|---|---|---|---|---|---|---|---|---|---|---|---|---|---|
| | | | Average healing rate in temperature range of 600°C to Ac$_1$ +10°C °C/s | Retention temperature °C | Retention time s | Average cooling rate in temperature range of 700 to 600°C °C/s | Retention temperature °C | Retention time s | Alloying temperature °C | Cooling stop temperature °C | Retention temperature °C | Retention time s | |
| 66 | F | 753 | 2.9 | 882 | 82 | 15.6 | 561 | 163 | 508 | 119 | 414 | 140 | Present invention example |
| 67 | B | 743 | 2.7 | 798 | 130 | 6.7 | 508 | 150 | 489 | 107 | 407 | 326 | Present invention example |

The underline indicates that the manufacturing condition is not preferable.

29

[Table 4A]

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder micro structure area % | Retained austenite at 30° grain boundary area % | TS MPa | El % | TS × El MPa•% | Impact absorbed energy in three-point bending test kJ | |
| 1 | A | 8.6 | 4.5 | 78.9 | 7.5 | 0.5 | 4.1 | 1189 | 15.8 | 18786 | 1.2 | Present invention example |
| 2 | A | 9.0 | 6.2 | 76.5 | 7.3 | 1.0 | 5.5 | 1190 | 14.9 | 17731 | 1.7 | Present invention example |
| 3 | A | 10.4 | 4.1 | 78.1 | 6.3 | 1.1 | 3.6 | 1193 | 14.8 | 17656 | 1.2 | Present invention example |
| 4 | A | 11.0 | 5.2 | 75.8 | 6.9 | 1.1 | 2.9 | 1181 | 16.3 | 19250 | 0.7 | Comparative example |
| 5 | A | 59.0 | 9.8 | 24.3 | 5.4 | 1.5 | 1.2 | 805 | 20.5 | 16503 | 0.6 | Comparative example |
| 6 | A | 10.0 | 3.8 | 78.2 | 6.8 | 1.2 | 2.3 | 1185 | 17.2 | 20382 | 0.6 | Comparative example |
| 7 | A | 10.5 | 2.6 | 82.5 | 3.2 | 1.2 | 1.5 | 1186 | 12.8 | 15181 | 0.6 | Comparative example |
| 8 | B | 15.3 | 7.0 | 67.2 | 9.2 | 1.3 | 4.8 | 1475 | 13.5 | 19913 | 1.6 | Present invention example |
| 9 | B | 14.0 | 4.8 | 71.4 | 8.6 | 1.2 | 5.3 | 1481 | 17.3 | 25621 | 1.9 | Present invention example |
| 10 | B | 1.2 | 2.1 | 91.3 | 5.1 | 0.3 | 1.1 | 1684 | 8.9 | 14988 | 0.9 | Comparative example |
| 11 | B | 13.8 | 6.0 | 74.2 | 4.8 | 1.2 | 2.6 | 1415 | 10.5 | 14858 | 0.9 | Comparative example |

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder micro structure area % | Retained austenite at 30° grain boundary area % | TS MPa | El % | TS × El MPa•% | Impact absorbed energy in three-point bending test kJ | |
| 12 | B | 12.5 | 18.0 | 63.9 | 4.1 | 1.5 | 2.1 | 1301 | 11.3 | 14701 | 0.8 | Comparative example |
| 13 | B | 16.0 | 6.1 | 71.7 | 5.3 | 0.9 | 2.6 | 1348 | 12.5 | 16850 | 0.9 | Comparative example |
| 14 | c | 13.1 | 6.2 | 73.2 | 5.4 | 2.1 | 3.5 | 1300 | 14.9 | 19370 | 1.1 | Present invention example |
| 15 | C | 15.0 | 8.3 | 66.5 | 8.4 | 1.8 | 5.1 | 1299 | 17.4 | 22603 | 1.7 | Present invention example |
| 16 | c | 13.0 | 4.1 | 74.7 | 6.8 | 1.4 | 2.4 | 1249 | 14.5 | 18111 | 0.8 | Comparative example |
| 17 | C | 11.2 | 25.0 | 54.3 | 8.2 | 1.3 | 4.1 | 1185 | 13.4 | 15879 | 1.2 | Comparative example |
| 18 | C | 14.0 | 4.9 | 73.1 | 6.1 | 1.9 | 2.7 | 1264 | 14.1 | 17822 | 0.7 | Comparative example |
| 19 | C | 14.0 | 3.9 | 75.9 | 4.1 | 2.1 | 1.9 | 1264 | 12.5 | 15800 | 0.9 | Comparative example |
| 20 | C | 0.3 | 0.3 | 94.0 | 5.1 | 0.3 | 3.5 | 1515 | 9.5 | 14393 | 1.1 | Comparative example |

The underline indicates that the value is out of the range of the present invention and properties are not preferable.

[Table 4B]

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder microstructure area % | Retained austenite at 30° grain boundary area % | TS MPa | El % | TS × El MPa•% | Impact absorbed energy in three-point bending test kJ | |
| 21 | D | 14.2 | 5.6 | 71.1 | 8.2 | 0.9 | 4.9 | 1235 | 16.5 | 20378 | 1.4 | Present invention example |
| 22 | D | 12.0 | 5.6 | 72.4 | 8.8 | 1.2 | 6.2 | 1271 | 16.9 | 21480 | 1.8 | Present invention example |
| 23 | D | 12.5 | 5.3 | 75.3 | 5.8 | 1.1 | 2.6 | 1237 | 14.5 | 17937 | 0.9 | Comparative example |
| 24 | D | 13.5 | 4.8 | 72.6 | 7.9 | 1.2 | 2.8 | 1205 | 16.1 | 19401 | 0.8 | Comparative example |
| 25 | E | 15.3 | 5.8 | 68.9 | 8.5 | 1.5 | 4.7 | 1210 | 16.5 | 19965 | 1.6 | Present invention example |
| 26 | E | 12.0 | 6.6 | 71.4 | 8.4 | 1.6 | 6.8 | 1243 | 17.1 | 21255 | 1.7 | Present invention example |
| 27 | E | 14.0 | 6.2 | 69.8 | 7.9 | 2.1 | 2.4 | 1201 | 17.2 | 20657 | 0.7 | Comparative example |
| 28 | F | 11.2 | 5.6 | 73.8 | 7.3 | 2.1 | 4.8 | 1220 | 14.5 | 17690 | 1.6 | Present invention example |
| 29 | F | 12.0 | 4.7 | 73.7 | 8.1 | 1.5 | 2.9 | 1199 | 16.3 | 19544 | 0.9 | Comparative example |
| 30 | F | 12.0 | 4.3 | 76.4 | 6.1 | 1.2 | 2.9 | 1225 | 14.2 | 17395 | 0.8 | Comparative example |

(continued)

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder microstructure area % | Retained austenite at 30° grain boundary area % | TS MPa | El % | TS × El MPa•% | Impact absorbed energy in three-point bending test kJ | |
| 31 | G | 17.5 | 6.7 | 65.9 | 8.3 | 1.6 | 4.5 | 1186 | 18.3 | 21704 | 1.2 | Present invention example |
| 32 | G | 11.0 | 5.6 | 73.4 | 7.9 | 2.1 | 5.4 | 1200 | 16.4 | 19680 | 1.8 | Present invention example |
| 33 | G | 13.0 | 5.1 | 74.2 | 6.5 | 1.2 | 2.4 | 1221 | 15.2 | 18559 | 0.8 | Comparative example |
| 34 | G | 13.0 | 6.7 | 71.2 | 7.9 | 1.2 | 2.6 | 1218 | 15.4 | 18757 | 0.9 | Comparative example |
| 35 | G | 14.0 | 5.5 | 71.9 | 7.2 | 1.4 | 2.4 | 1199 | 14.5 | 17386 | 0.7 | Comparative example |
| 36 | H | 9.6 | 4.5 | 78.2 | 6.7 | 1.0 | 4.1 | 1326 | 16.4 | 21746 | 1.4 | Present invention example |
| 37 | I | 13.2 | 4.9 | 74.0 | 7.2 | 0.7 | 4.1 | 1186 | 15.9 | 18857 | 1.5 | Present invention example |
| 38 | I | 10.0 | 4.7 | 75.7 | 8.1 | 1.5 | 6.2 | 1231 | 16.3 | 20065 | 1.7 | Present invention example |
| 39 | I | 13.2 | 4.9 | 74.3 | 6.3 | 1.3 | 2.2 | 1185 | 17.2 | 20382 | 0.7 | Comparative example |
| 40 | J | 12.5 | 6.1 | 73.3 | 6.5 | 1.6 | 3.9 | 1268 | 15.6 | 19781 | 1.4 | Present invention example |

The underline indicates that the value is out of the range of the present invention and properties are not preferable.

[Table 4C]

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder micro structure area % | Retained austenite at 30° grain boundary area % | TS MPa | El % | TS × El MPa·% | Impact absorbed energy in three-point bending test kJ | |
| 41 | K | 8.5 | 5.2 | 76.6 | 8.3 | 1.4 | 4.2 | 1284 | 16.4 | 21058 | 1.4 | Present invention example |
| 42 | L | 18.3 | 6.4 | 66.0 | 8.2 | 1.1 | 4.4 | 1220 | 18.2 | 22204 | 1.5 | Present invention example |
| 43 | M | 15.2 | 6.2 | 70.2 | 6.4 | 2.0 | 4.7 | 1210 | 16.5 | 19965 | 1.3 | Present invention example |
| 44 | N | 14.1 | 5.8 | 70.9 | 7.1 | 2.1 | 4.1 | 1195 | 16.4 | 19598 | 1.2 | Present invention example |
| 45 | O | 13.1 | 5.9 | 70.7 | 8.9 | 1.4 | 4.6 | 1263 | 17.3 | 21850 | 1.4 | Present invention example |
| 46 | P | 10.5 | 5.4 | 77.1 | 5.9 | 1.1 | 4.2 | 1202 | 15.9 | 19112 | 1.3 | Present invention example |
| 47 | Q | 15.1 | 5.3 | 69.9 | 7.8 | 1.9 | 4.1 | 1205 | 17.6 | 21208 | 1.2 | Present invention example |
| 48 | R | 8.3 | 5.0 | 77.9 | 7.4 | 1.4 | 4.1 | 1259 | 15.5 | 19515 | 1.3 | Present invention example |
| 49 | S | 11.2 | 5.4 | 76.7 | 5.4 | 1.3 | 3.6 | 1196 | 15.6 | 18658 | 1.1 | Present invention example |

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder micro structure area % | Retained austenite at 30° grain boundary area % | TS MPa | El % | TS × El MPa•% | Impact absorbed energy in three-point bending test kJ | |
| 50 | T | 13.5 | 6.1 | 72.5 | 6.7 | 1.2 | 4.5 | 1246 | 16.1 | 20061 | 1.4 | Present invention example |
| 51 | U | 11.2 | 5.6 | 76.8 | 5.4 | 1.0 | 3.3 | 1186 | 15.4 | 18264 | 1.1 | Present invention example |
| 52 | V | 10.0 | 6.3 | 76.7 | 5.8 | 1.2 | 3.6 | 1189 | 16.2 | 19262 | 1.2 | Present invention example |
| 53 | W | 11.6 | 5.4 | 74.9 | 6.4 | 1.7 | 4.0 | 1243 | 16.4 | 20385 | 1.4 | Present invention example |
| 54 | X | 12.3 | 6.3 | 69.8 | 9.5 | 2.1 | 4.6 | 1251 | 18.3 | 22893 | 1.3 | Present invention example |
| 55 | Y | 12.4 | 6.1 | 71.2 | 8.8 | 1.5 | 4.9 | 1284 | 15.6 | 20030 | 1.2 | Present invention example |
| 56 | Z | 5.4 | 2.7 | 75.5 | 15.0 | 1.4 | 8.3 | 1704 | 6.2 | 10565 | 1.2 | Comparative example |
| 57 | AA | 9.2 | 3.6 | 82.0 | 4.1 | 1.1 | 2.2 | 1095 | 14.2 | 15549 | 0.6 | Comparative example |
| 58 | AB | 11.2 | 8.5 | 78.7 | 0.2 | 1.4 | 0.2 | 1181 | 12.0 | 14172 | 0.8 | Comparative example |
| 59 | AC | 13.5 | 5.6 | 75.7 | 4.2 | 1.0 | 3.4 | 1075 | 16.2 | 17415 | 1.3 | Comparative example |

(continued)

| Sample No. | Kind of Steel | Microstructure | | | | | | Mechanical properties | | | | Note |
|---|---|---|---|---|---|---|---|---|---|---|---|---|
| | | Ferrite area % | Bainite area % | Tempered martensite area % | Retained austenite area % | Remainder micro structure area % | Retained austenite at 30° grain boundary area % | TS MPa | El % | TS × El MPa•% | Impact absorbed energy in three-point bending test kJ | |
| 60 | AD | 9.6 | 5.4 | 76.2 | 8.0 | 0.8 | 1.8 | 1245 | 16.2 | 20169 | 0.6 | Comparative example |
| 61 | A | 2.5 | 4.5 | 84.7 | 6.9 | 1.4 | 5.0 | 1295 | 13.1 | 16965 | 1.3 | Present invention example |
| 62 | B | 24.4 | 1.7 | 64.9 | 7.4 | 1.6 | 5.6 | 1188 | 14.4 | 17107 | 1.1 | Present invention example |
| 63 | C | 26.7 | 3.3 | 60.8 | 8.6 | 0.6 | 4.9 | 1166 | 15.2 | 17723 | 1.3 | Comparative example |
| 64 | D | 15.0 | 9.6 | 69.1 | 5.3 | 1.0 | 3.7 | 1320 | 12.8 | 16896 | 1.6 | Present invention example |
| 65 | E | 2.7 | 1.4 | 90.2 | 5.5 | 0.2 | 3.6 | 1251 | 13.7 | 17139 | 1.5 | Present invention example |
| 66 | F | 3.7 | 5.5 | 72.5 | 18.2 | 0.1 | 9.9 | 1197 | 18.3 | 21905 | 1.2 | Present invention example |
| 67 | B | 18.3 | 1.1 | 60.7 | 19.6 | 0.3 | 18.7 | 1392 | 17.7 | 24638 | 1.6 | Present invention example |

The underline indicates that the value is out of the range of the present invention and properties are not preferable.

Tables 4A to 4C show that the galvanized steel sheets according to examples of the present invention have high strength and excellent ductility and impact resistance. Tables 4A to 4C also show that, in examples of the present invention in which width reduction rolling was performed on the slab at a rolling reduction of 10% or more, the retained austenite area ratio at the 30° grain boundary was 5.0% or more, and impact absorbed energy of 1.7 kJ or more was obtained.

In contrast, Tables 4A to 4C also show that the galvanized steel sheets according to the comparative examples do not have any one or more of the above characteristics.

[Field of Industrial Application]

According to the above aspect of the present invention, it is possible to provide a galvanized steel sheet having high strength and excellent ductility and impact resistance.

**Claims**

1. A galvanized steel sheet comprising:

   a steel sheet; and
   a galvanized layer provided on the steel sheet, wherein a chemical composition of the steel sheet comprises, in terms of mass%,
   C: 0.150 to 0.350%,
   Si: 0.100 to 2.500%,
   Mn: 1.50 to 4.50%,
   sol.Al: 0.010 to 1.000%,
   P: 0.100% or less,
   S: 0.030% or less,
   N: 0.100% or less,
   O: 0.010% or less,
   Ti: 0 to 0.200%,
   Nb: 0 to 0.025%,
   V: 0 to 0.100%,
   B: 0 to 0.0100%,
   Cu: 0 to 2.00%,
   Cr: 0 to 2.00%,
   Mo: 0 to 1.00%,
   Ni: 0 to 2.00%,
   Ca: 0 to 0.0200%,
   Mg: 0 to 0.0200%,
   REM: 0 to 0.1000%,
   Bi: 0 to 0.0200%,
   one or more of Zr, Co, Zn, and W: 0 to 1.0000% in total, and
   Sn: 0 to 0.100%,
   a remainder comprising Fe and impurities,
   a microstructure at a 1/4 position of a sheet thickness from a surface of the steel sheet includes, in terms of area%,
   ferrite: 2.0 to 25.0%,
   bainite: 10.0% or less,
   tempered martensite: more than 60.0% and 93.0% or less, and
   retained austenite: 5.0% or more, and
   an area ratio of the retained austenite,

      which is in contact with a 30° grain boundary,
      which has an Mn concentration of 1.2 times or more an average Mn concentration, and
      which has a grain size of 0.3 to 2.0 $\mu$m,

   is 3.0% or more.

2. The galvanized steel sheet according to claim 1, wherein the chemical composition of the steel sheet comprises, in terms of mass%, one or more selected from the group consisting of

Ti: 0.001 to 0.200%,
Nb: 0.001 to 0.025%,
V: 0.001 to 0.100%,
B: 0.0001 to 0.0100%,
Cu: 0.01 to 2.00%,
Cr: 0.01 to 2.00%,
Mo: 0.001 to 1.00%,
Ni: 0.01 to 2.00%,
Ca: 0.0005 to 0.0200%,
Mg: 0.0005 to 0.0200%,
REM: 0.0005 to 0.1000%,
Bi: 0.0005 to 0.0200%,
one or more of Zr, Co, Zn, and W: 0.0005 to 1.0000% in total, and
Sn: 0.0005 to 0.100%.

FIG. 1

| INTERNATIONAL SEARCH REPORT | | International application No. |
|---|---|---|
| | | **PCT/JP2022/043522** |

**A.    CLASSIFICATION OF SUBJECT MATTER**

*C22C 38/00*(2006.01)i; *C22C 38/58*(2006.01)i; *C21D 8/02*(2006.01)n; *C21D 9/46*(2006.01)n
FI:    C22C38/00 301W; C22C38/58; C22C38/00 301T; C21D8/02 A; C21D9/46 U; C21D9/46 J

According to International Patent Classification (IPC) or to both national classification and IPC

**B.    FIELDS SEARCHED**

Minimum documentation searched (classification system followed by classification symbols)

C22C38/00-38/60; C21D8/02; C21D9/46

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2019/187124 A1 (NIPPON STEEL CORP) 03 October 2019 (2019-10-03) claims, tables 4-1, 4-2 | 1-2 |
| A | JP 2017-525847 A (ARCELORMITTAL) 07 September 2017 (2017-09-07) claims, table 1 | 1-2 |
| A | WO 2013/051160 A1 (JFE STEEL CORPORATION) 11 April 2013 (2013-04-11) claims, tables 4, 5 | 1-2 |
| A | WO 2016/157896 A1 (JFE STEEL CORPORATION) 06 October 2016 (2016-10-06) claims, table 3 | 1-2 |
| A | JP 10-68046 A (KAWASAKI STEEL CORP) 10 March 1998 (1998-03-10) claims, paragraph [0011] | 1-2 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/043522**

| Patent document cited in search report | | | Publication date (day/month/year) | Patent family member(s) | | | Publication date (day/month/year) |
|---|---|---|---|---|---|---|---|
| WO | 2019/187124 | A1 | 03 October 2019 | US | 2021/0017622 | A1 | |
| | | | | claims, table 4 | | | |
| | | | | CN | 111684096 | A | |
| JP | 2017-525847 | A | 07 September 2017 | WO | 2016/001897 | A2 | |
| | | | | claims, table 1 | | | |
| | | | | WO | 2016/001708 | A1 | |
| | | | | EP | 3722445 | A1 | |
| | | | | US | 2017/0137908 | A1 | |
| | | | | US | 2020/0224287 | A1 | |
| | | | | CN | 106574315 | A | |
| | | | | JP | 2020-45572 | A | |
| WO | 2013/051160 | A1 | 11 April 2013 | EP | 2757171 | A1 | |
| | | | | claims, tables 4, 5 | | | |
| | | | | US | 2014/0377584 | A1 | |
| | | | | US | 2016/0160310 | A1 | |
| | | | | CN | 103857820 | A | |
| | | | | JP | 2012-31462 | A | |
| WO | 2016/157896 | A1 | 06 October 2016 | EP | 3279353 | A1 | |
| | | | | claims, table 3 | | | |
| | | | | US | 2018/0119240 | A1 | |
| | | | | CN | 107429362 | A | |
| JP | 10-68046 | A | 10 March 1998 | (Family: none) | | | |

Form PCT/ISA/210 (patent family annex) (January 2015)

**REFERENCES CITED IN THE DESCRIPTION**

**Patent documents cited in the description**

- JP 2021191746 A
- WO 2019131189 A